# EUROPEAN PATENT SPECIFICATION

(11) **EP 2 311 918 B1**
(45) Date of publication and mention of the grant of the patent: **22.10.2014**
(21) Application number: 10178013.8
(22) Date of filing: 21.09.2010
(51) Int. Cl.: C09D 11/00, C09D 11/10

(54) **Ink composition, and inkjet recording method**
Tintenzusammensetzung und Tintenaufzeichnungsverfahren
Composition d'encre et procédé d'enregistrement à jet d'encre

(30) Priority: 29.09.2009 JP 2009224313
(43) Date of publication of application: 20.04.2011
(73) Proprietor: FUJIFILM Corporation, Tokyo (JP)
(72) Inventor: Mochizuki, Kyohei, Kanagawa (JP)
(74) Representative: Morpeth, Fraser Forrest

(56) References cited:
- WO-A1-02/42383
- WO-A1-98/33855
- WO-A1-2007/045579
- FR-A1- 2 828 203
- C. DECKER ET AL.: "Kinetic Study of Ultrafast Photopolymerisation Reactions", JOURNAL OF MACROMOLECULAR SCIENCE, PART A, [Online] vol. 33, no. 2 , - 1996, pages 173-190, XP002616579, DOI: 10.1080/10601329608010861 Retrieved from the Internet: URL:http://dx.doi.org/10.1080/106013296080 10861> [retrieved on 2011-01-12]

## Description

The present invention relates to an ink composition and inkjet recording method.

Inkjet systems, in which ink is discharged as droplets from an ink discharge orifice, are employed in many printers for reasons such as small size, low cost, and an ability to form an image without contacting a recording medium. Among these inkjet systems, a piezo inkjet system, in which ink is discharged by utilizing deformation of a piezoelectric element, and a thermal inkjet system, in which droplets of ink are discharged by utilizing the phenomenon of boiling of the ink by means of thermal energy, are characterized by their high resolution and high speed printing properties.

At present, when printing by means of an inkjet printer, which involves ink droplets being fired onto plain paper or a non-absorbing recording medium such as a plastic, high speed, high image quality, and good fixation to the recording medium are important issues. Inkjet recording discharges ink droplets according to image data and forms lines and/or images on a recording medium with the droplets.

Development has been carried out with the intention of improving the fixation to a recording medium. With respect to a swellable substrate (PVC, polycarbonate), as an example of improving the fixation by dissolving a small amount of the surface of a recording medium (anchoring effect), an N-vinyl compound, etc. is used (ref. JP-A-2008-195882 (JP-A denotes a Japanese unexamined patent application publication)).

Furthermore, various research and development activities have been carried out with respect to increasing the sensitivity of an ink; for example, as described in Macromolecules, 2003, Vol. 36, pp. 3861-3873 and Macromolecules, 2002, Vol. 35, pp. 7529-7531, it is reported that use of a monomer having in its side chain a high dipole moment (high polarity site) substituent such as one having hydrogen bonding ability can achieve an improvement in polymerization speed (increase in sensitivity).

As described in JP-A-2008-195882, improvement of adhesion by the anchoring effect is realized by a high polarity monomer or a monomer having a high polarity site, and a pigment dispersion formed from a pigment and a dispersant is often destabilized. Furthermore, when monomers described in Macromolecules, 2003, Vol. 36, pp. 3861-3873 and Macromolecules, 2002, Vol. 35, pp. 7529-7531 are used, there is a tendency for a pigment dispersion to be destabilized, and it is important to achieve improved adhesion and increased sensitivity without destabilizing a pigment dispersion.

Other relevant art includes Decker, C. et al in Journal of Macromolecular Science, Part A (1996), vol 33, pages 172-190, WO 2002/42383, WO 2007/045579, WO 1998/33855 and FR2828203

It is an object of the present invention to provide an ink composition having excellent pigment dispersion stability and excellent adhesion and curability. It is another object of the present invention to provide an inkjet recording method employing the ink composition.

The above-mentioned object of the present invention has been attained by means described from <1> and <13> below. They are described below together with <2> to <12>, which are preferred embodiments.
<1> An ink composition comprising: (A) a compound represented by Formula (1); (B) a (meth)acrylate compound having an alicyclic structure; (C) a radical polymerization initiator; and (D) a pigment 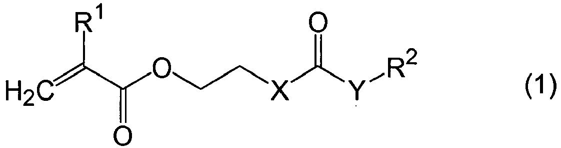 (in Formula (1), R¹ denotes a hydrogen atom or a methyl group, R² denotes an alkyl group, X denotes -O-, and Y denotes -O-, or a single bond),
<2> The ink composition according to <1>, wherein with regard to X and Y in Formula (1), X is -O- and Y is -O-,
<3> The ink composition according to <1> or <2>, wherein R² in Formula (1) is a straight-chain or branched alkyl group having 1 to 18 carbon atoms or a cycloalkyl group having 3 to 15 carbon atoms,
<4> The ink composition according to any one of <1> to <3>, wherein compound (A) represented by Formula (1) has a content of 3 to 70 wt % of the total ink composition,
<5> The ink composition according to any one of <1> to <4>, wherein the (meth)acrylate compound (B) having an alicyclic structure is a compound represented by Formula (B-2) or Formula (B-3) 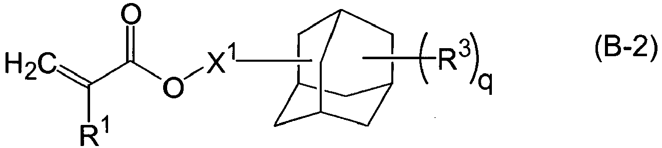 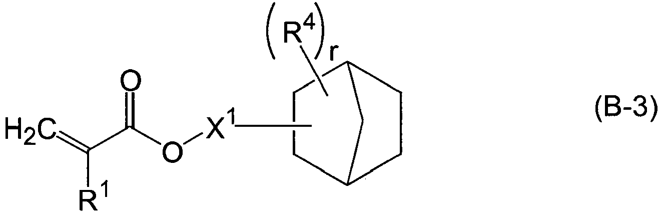 (in Formula (B-2) and (B-3), R¹ denotes a hydrogen atom or a methyl group, X¹ denotes a single bond or a divalent linking group, R³ and R⁴ independently denote a substituent, q denotes an integer of 0 to 5, r denotes an integer of 0 to 5, a carbon atom of the adamantane skeleton in Formula (B-2) may be replaced by a carbonyl bond (-C(O)-) and/or an ester bond (-C(O)O-), and a carbon atom of the norbornane skeleton in Formula (B-3) may be replaced by an ether bond (-O-) and/or an ester bond (-C(O)O-)),
<6> The ink composition according to any one of <1> to <5>, wherein the (meth)acrylate compound (B) having an alicyclic structure is a compound represented by Formula (B-5), Formula (B-6), or Formula (B-7) 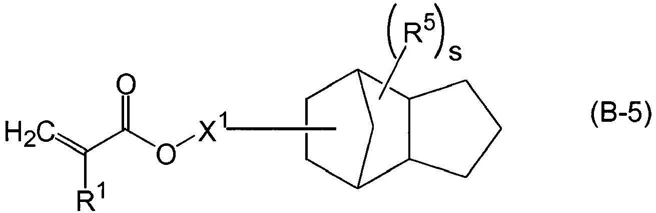 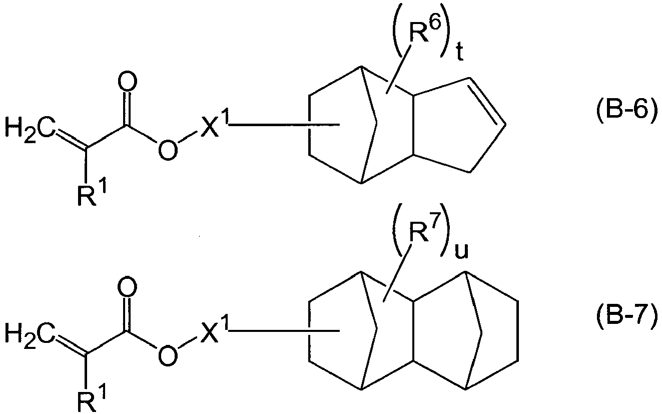 (in Formula (B-5), Formula (B-6), and Formula (B-7), R¹ denotes a hydrogen atom or a methyl group, X¹ denotes a single bond or a divalent linking group, R⁵, R⁶, and R⁷ independently denote a substituent, s, t, and u independently denote an integer of 0 to 5, and the s R⁵s, the t R⁶s, and the u R⁷s may be identical to or different from each other),
<7> The ink composition according to any one of <1> to <6>, wherein the (meth)acrylate compound (B) having an alicyclic structure has a content of 3 to 50 wt % of the total ink composition,
<8> The ink composition according to any one of <1> to <7>, wherein it further comprises a monofunctional radically polymerizable monomer having an N-vinyl group and having a cyclic structure-containing group,
<9> The ink composition according to any one of <1> to <8>, wherein it further comprises a monofunctional radically polymerizable monomer having an aromatic group,
<10> The ink composition according to any one of <1> to <9>, wherein the radical polymerization initiator (C) comprises an acylphosphine oxide compound,
<11> An inkjet recording method comprising: (a) a step of discharging onto a recording medium the ink composition according to any one of Claims 1 to 10; and (b) a step of curing the ink composition by irradiating the discharged ink composition with actinic radiation.

In accordance with the present invention, an ink composition having excellent pigment dispersion stability and excellent adhesion and curability can be provided. Furthermore, in accordance with the present invention, there can be provided an inkjet recording method employing the ink composition.

The ink composition of the present invention comprises: (A) a compound represented by Formula (1); (B) a (meth)acrylate compound having an alicyclic structure; (C) a radical polymerization initiator; and (D) a pigment; 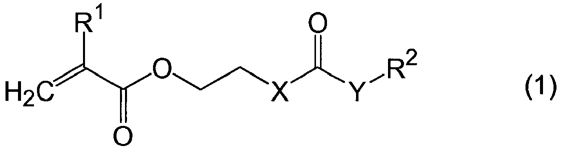 (in Formula (1), R¹ denotes a hydrogen atom or a methyl group, R² denotes an alkyl group, X denotes -O-, and Y denotes -O-, or a single bond).

The ink composition of the present invention may be used suitably as an inkjet recording ink composition. Moreover, the ink composition of the present invention preferably comprises, in addition to components (A) to (D) may further comprise another component such as a dispersant.

In the present invention, use of at least compound (A) represented by Formula (1) above and the (meth)acrylate compound (B) having an alicyclic structure as radically polymerizable compounds can give an ink composition having excellent curability and substrate adhesion, excellent pigment dispersion stability, and excellent stability over time.

In addition, in the present invention, the notation 'A to B', which expresses a numerical range, means 'at least A but no greater than B' unless otherwise specified. That is, it means a numerical range that includes end points A and B.

Furthermore, in the chemical structural formulae in the present invention, hydrocarbon chains are sometimes given as simplified structural formulae in which symbols for carbon (C) and hydrogen (H) are omitted.

The present invention is explained in detail below.

The ink composition of the present invention is an ink composition that can cure upon exposure to radiation and is also an oil-based ink composition.

The 'radiation' referred to in the present invention is not particularly limited as long as it is actinic radiation that can provide energy that enables an initiating species to be generated in the ink composition when irradiated, and broadly includes α rays, γ rays, X rays, ultraviolet rays (UV), visible light, and an electron beam; among these, ultraviolet rays and an electron beam are preferable from the viewpoint of curing sensitivity and the availability of equipment, and ultraviolet rays are particularly preferable. The ink composition of the present invention is therefore preferably an ink composition that can cure upon exposure to ultraviolet rays as radiation.

### (A) Compound represented by Formula (1)

The ink composition of the present invention comprises a compound represented by Formula (1) below (hereinafter also called compound (A) represented by Formula (1) or compound (A)). 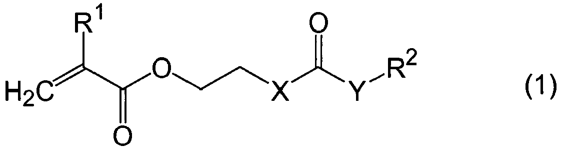 (In Formula (1), R¹ denotes a hydrogen atom or a methyl group, R² denotes an alkyl group, X denotes -O-, and Y denotes -O-, or a single bond.)

In Formula (1), R¹ denotes a hydrogen atom or a methyl group, and from the viewpoint of curability is preferably a hydrogen atom.

In Formula (1), R² denotes an alkyl group, and the alkyl group may be any of straight chain, branched, and cyclic. R² is preferably a straight-chain or branched alkyl group having 1 to 18 carbon atoms or a cycloalkyl group having 3 to 15 carbon atoms, more preferably a straight-chain or branched alkyl group having 2 to 12 carbon atoms or a cycloalkyl group having 6 to 12 carbon atoms, and yet more preferably a branched alkyl group having 3 to 9 carbon atoms or a cycloalkyl group having 6 to 10 carbon atoms. It is preferable from the viewpoint of curability and adhesion, and in particular from the viewpoint of curability by UV irradiation and adhesion, for R² to be the above-mentioned group.

In Formula (1), X denotes -O-.

In Formula (1), Y denotes -O-, or a single bond.

In Formula (1), a combination (X, Y) of X and Y is preferably (-O-, -O-), (-O-, single bond), or more preferably (-O-, -O-).

It is preferable for the combination of X and Y to be the above-mentioned combination since good pigment dispersion stability, substrate adhesion, and curability are obtained.

Specific examples of the compound represented by Formula (1) are shown below, but the present invention is not limited thereto. When Y is a single bond, it is denoted by '-' in the tables.

**(Table 1)**

| Compound No. | R¹ | X | Y | R² |
|---|---|---|---|---|
| Chem-1 | H | O | - | -C₂H₅ |
| Chem-2 | | | | -CH₂CH₂CH₃ |
| Chem-3 | | | | -CH(CH₃)₂ |
| Chem-4 | | | | -CH₂CH₂CH₂CH₃ |
| Chem-5 | | | | -CH(CH₃)(CH₂CH₃) |
| Chem-6 | | | | -C(CH₃)₃ |
| Chem-7 | | | | -*n*-C₆H₁₃ |
| Chem-8 | | | | -cyclo-C₆H₁₃ |
| Chem-9 | | | | -*n*-C₈H1₇ |
| Chem-10 | | | | -*n*-C₁₀H₂₁ |

| Compound No. | R¹ | X | Y | R² |
|---|---|---|---|---|
| Chem-11 | H | O | O | -C₂H₅ |
| Chem-12 | | | | -CH₂CH₂CH₃ |
| Chem-13 | | | | -CH(CH₃)₂ |
| Chem-14 | | | | -CH₂CH₂CH₂CH₃ |
| Chem-15 | | | | -CH(CH₃)(CH₂CH₃) |
| Chem-16 | | | | -C(CH₃)₃ |
| Chem-17 | | | | -*n*-C₆H₁₃ |
| Chem-18 | | | | -cyclo-C₆H₁₃ |
| Chem-19 | | | | -*n*-C₈H₁₇ |
| Chem-20 | | | | -*n*-C₁₀H₂₁ |

**(Table 2)**

| Compound No. | R¹ | X | Y | R² |
|---|---|---|---|---|
| Chem-21 | CH₃ | O | - | -C₂H₅ |
| Chem-22 | | | | -CH₂CH₂CH₃ |
| Chem-23 | | | | -CH(CH₃)₂ |
| Chem-24 | | | | -CH₂CH₂CH₂CH₃ |
| Chem-25 | | | | -CH(CH₃)(CH₂CH₃) |
| Chem-26 | | | | -C(CH₃)₃ |
| Chem-27 | | | | -*n*-C₆H₁₃ |
| Chem-28 | | | | -cyclo-C₆H₁₃ |
| Chem-29 | | | | -*n*-C₈H₁₇ |
| Chem-30 | | | | -*n*-C₁₀H₂₁ |
| Chem-31 | CH₃ | O | O | -C₂H₅ |
| Chem-32 | | | | -CH₂CH₂CH₃ |
| Chem-33 | | | | -CH(CH₃)₂ |
| Chem-34 | | | | -CH₂CH₂CH₂CH₃ |
| Chem-35 | | | | -CH(CH₃)(CH₂CH₃) |
| Chem-36 | | | | -C(CH₃)₃ |
| Chem-37 | | | | -*n*-C₆H₁₃ |
| Chem-38 | | | | -cyclo-C₆H₁₃ |
| Chem-39 | | | | -*n*-C₈H₁₇ |
| Chem-40 | | | | -*n*-C₁₀H₂₁ |

Among those above, Chem-1, Chem-6, Chem-8, Chem-11, Chem-13, Chem-15, and Chem-18 are preferable and Chem-1, Chem-6, Chem-11, Chem-13, Chem-15, and Chem-18 are yet more preferable.

In the ink composition of the present invention, with regard to compound (A), one type may be used on its own or two or more types may be used in combination.

The content of compound (A) is preferably 3 to 70 wt % of the total ink composition, more preferably 5 to 60 wt %, and yet more preferably 8 to 50 wt %. It is preferable for the content of compound (A) represented by Formula (1) to be in the above-mentioned range since a balance between curability, adhesion, and pigment dispersion stability can be achieved.

In addition, when two or more types of compounds are used as compound (A), the total thereof is preferably the above-mentioned content. This also applies to other components described below.

### (B) (Meth)acrylate compound having alicyclic structure

The ink composition of the present invention comprises a (meth)acrylate compound having an alicyclic structure (hereinafter, also called compound (B)).

With regard to the (meth)acrylate compound having an alicyclic structure, one type may be used on its own or two or more types may be used in combination, without particular limitation.

Here, the description '(meth)acrylate compound' is an abbreviated notation indicating one or both of 'acrylate compound' and 'methacrylate compound'.

Compound (B) may have at least one acryloyloxy group or methacryloyloxy group and an alicyclic structure, and may have two or more acryloyloxy groups or methacryloyloxy groups or two or more alicyclic structures.

Compound (B) preferably has 1 to 4 acryloyloxy groups and/or methacryloyloxy groups, more preferably has 1 to 3, yet more preferably has 1 or 2, and particularly preferably has 1. That is, from the viewpoint of decreasing the viscosity of the composition compound (B) is particularly preferably a monofunctional acrylate compound or a monofunctional methacrylate compound.

Furthermore, from the viewpoint of curability compound (B) is preferably an acrylate compound.

Compound (B) is preferably a compound represented by Formula (B-1) below.

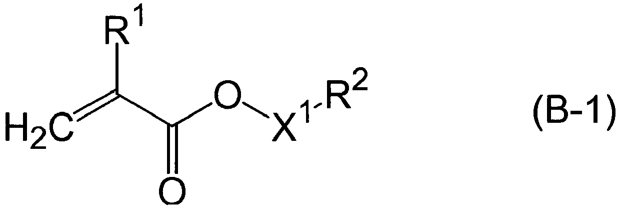

In Formula (B-1), R¹ denotes a hydrogen atom or a methyl group.

X¹ denotes a single bond or a divalent linking group. The divalent linking group is preferably an ether bond (-O-), an ester bond (-C(O)O- or -OC(O)-), an amide bond (-C(O)NH- or -NHC(O)-), a carbonyl bond (-C(O)-), an optionally branched alkylene group having no greater than 20 carbon atoms, or a divalent linking group formed by combining the above.

R² is a monovalent to trivalent group, and preferably a monovalent group, and a group having at least one or more alicyclic structures, and denotes an alicyclic hydrocarbon group having a cycloalkane skeleton, an adamantane skeleton, or a norbornane skeleton. The cyclic structure of the above-mentioned alicyclic hydrocarbon group may contain a heteroatom such as O, N, or S. When R² is a divalent or trivalent group, R² may further have Cl, a hydroxy group, or an alkoxy group bonded thereto.

The alicyclic hydrocarbon group may be a group having a cycloalkane having 3 to 12 carbons.

Specific examples of the alicyclic hydrocarbon group containing a heteroatom such as O, N, or S include a pyrrolidinyl group, a pyrrolidinediyl group, a pyrrolidinetriyl group, a pyrazolidinyl group, a pyrazolidinediyl group, a pyrazolidinetriyl group, an imidazolidinyl group, an imidazolidinediyl group, an imidazolidinetriyl group, an isooxazolidinyl group, an isooxazolidinediyl group, an isooxazolidinetriyl group, an isothiazolidinyl group, an isothiazolidinediyl group, an isothiazolidinetriyl group, a piperidinyl group, a piperidinediyl group, a piperidinetriyl group, a piperazinyl group, a piperazinediyl group, a piperazinetriyl group, a morpholinyl group, a morpholinediyl group, a morpholinetriyl group, a thiomorpholinyl group, a thiomorpholinediyl group, a thiomorpholinetriyl group, a diazolyl group, a diazolediyl group, a diazoletriyl group, a triazolyl group, a triazolediyl group, a triazoletriyl group, a tetrazolyl group, a tetrazolediyl group, and a tetrazoletriyl group.

These alicyclic hydrocarbon and heterocycle-containing alicyclic hydrocarbon groups may have a substituent, and the substituent is preferably a halogen atom, a hydroxyl group, an amino group, a thiol group, a siloxane group, an optionally substituted hydrocarbon group having a total of no greater than 30 carbons, a heterocyclic group containing a heteroatom such as O, N, or S, or an oxy group (=O) as a divalent substituent.

Furthermore, compound (B) is preferably a compound represented by Formula (B-2) below having an adamantane skeleton or a (meth)acrylate compound represented by Formula (B-3) below having an alicyclic structure having a norbornane skeleton.

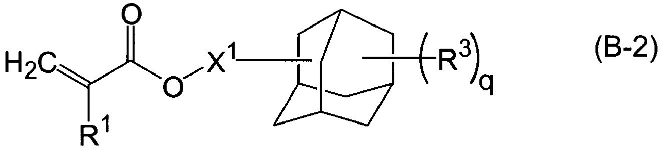

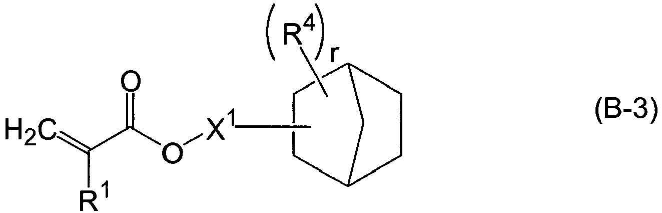

In Formula (B-2) and (B-3), R¹ and X¹ have the same meanings as R¹ and X¹ in Formula (B-1), and preferred ranges are also the same.

R³ and R⁴ in Formula (B-2) or Formula (B-3) independently denote a substituent that may be bonded to any position on each of the alicyclic hydrocarbon structures. Furthermore, the q R³s and the r R⁴s may each be identical to or different from each other. When q is no less than 2, the two or more R³ may be bonded with each other to form a ring. When r is no less than 2, the two or more R⁴ may be bonded with each other to form a ring.

The q R³s and the r R⁴s may independently be a monovalent or polyvalent substituent; the monovalent substituent is preferably a hydrogen atom, a hydroxyl group, a substituted or unsubstituted amino group, a thiol group, a siloxane group, or an optionally substituted hydrocarbon group or heterocyclic group having a total of no greater than 30 carbons, and a divalent substituent is preferably an oxy group (=O).

The substitution number q for R³ denotes an integer of 0 to 5, and the substitution number r for R⁴ denotes an integer of 0 to 5.

Furthermore, one carbon atom of the adamantane framework in Formula (B-2) may be replaced by a carbonyl bond (-C(O)-) and/or an ester bond (-C(O)O-), and one carbon atom of the norbornane framework in Formula (B-3) may be replaced by an ether bond (-O-) and/or an ester bond (-C(O)O-).

The (meth)acrylate compound having the norbornane skeleton represented by Formula (B-3) may have a cyclic hydrocarbon structure represented by Formula (B-4). n in Formula (B-4) denotes a cyclic hydrocarbon structure whose opposite termini may substitute any positions of the norbornane skeleton, it may be a monocyclic structure or a polycyclic structure, and it may contain a carbonyl bond (-C(O)-) and/or an ester bond (-C(O)O-) in the cyclic hydrocarbon structure as well as the hydrocarbon bonds.

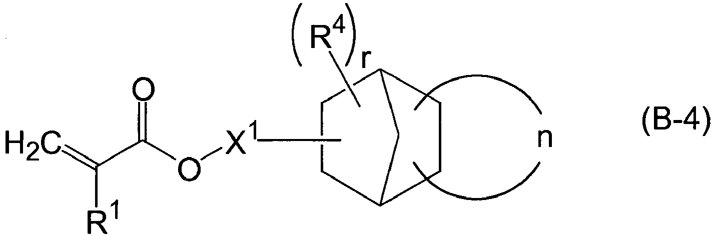

The compound represented by Formula (B-4) above is preferably a compound represented by Formula (B-5), Formula (B-6), or Formula (B-7).

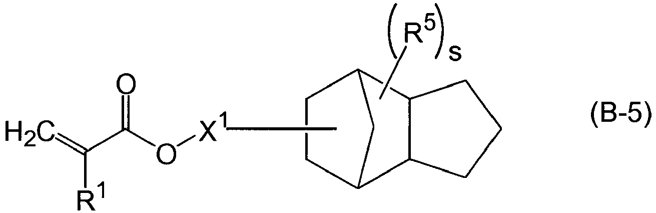

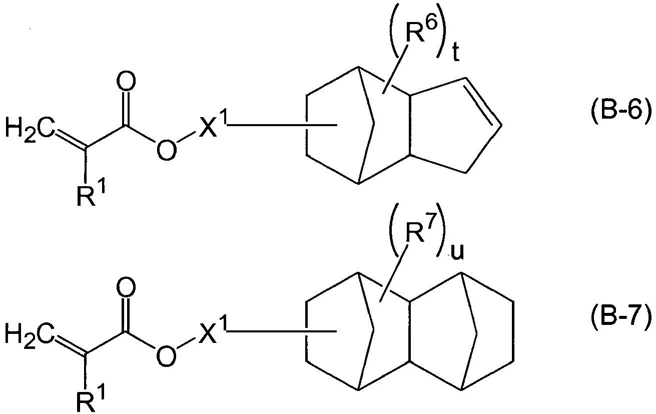

In Formula (B-5), Formula (B-6), and Formula (B-7), R¹ and X¹ have the same meanings as R¹ and X¹ in Formula (B-1) above, and preferred ranges are also the same.

In Formula (B-5), Formula (B-6), and Formula (B-7), R⁵, R⁶, and R⁷ independently denote a substituent, s, t, and u independently denote an integer of 0 to 5, and the s R⁵s, the t R⁶s, and the u R⁷s may each be identical to or different from each other.

X¹ may be bonded to any position on each of the alicyclic hydrocarbon structures shown in Formula (B-5), Formula (B-6), or Formula (B-7).

R⁵, R⁶, and R⁷ of Formula (B-5), Formula (B-6), or Formula (B-7) independently denote a substituent, and may be bonded to any position on each of the alicyclic hydrocarbon structures shown below in Formula (B-5), Formula (B-6), or Formula (B-7). The substituents R⁵, R⁶, and R⁷ have the same meanings as the substituents R³ and R⁴ of Formula (B-2) to Formula (B-4), and preferred ranges are also the same.

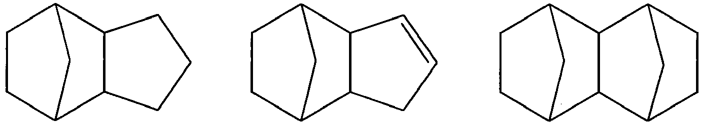

Among compounds represented by Formula (B-5) to Formula (B-7), compounds represented by Formula (B-5) and Formula (B-6) are more preferable.

In the present invention, preferred examples of the compound (B) include monofunctional radically polymerizable monomers having a group having a cyclic structure such as a pyridyl group, a tetrahydrofurfuryl group, a piperidinyl group, a cyclohexyl group, a cyclopentyl group, a cycloheptyl group, an isobornyl group, dicyclopentanyl group, a dicyclopentenyl group, or a tricyclodecanyl group.

Preferred examples of the compound (B) include norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, trimethylcyclohexyl (meth)acrylate, 4-*t*-butylcyclohexyl (meth)acrylate, acryloylmorpholine, tetrahydrofurfuryl (meth)acrylate, caprolactone-modified tetrahydrofurfuryl acrylate, *N*-phthalimidoethyl (meth)acrylate, pentamethylpiperidyl (meth)acrylate, tetramethylpiperidyl (meth)acrylate, and 5-(meth)acryloyloxymethyl-5-ethyl-1,3-dioxacyclohexane.

Furthermore, preferred specific examples of the monofunctional radically polymerizable monomer that can be used in the present invention are shown in M-1 to M-25 below.

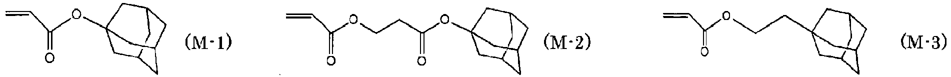

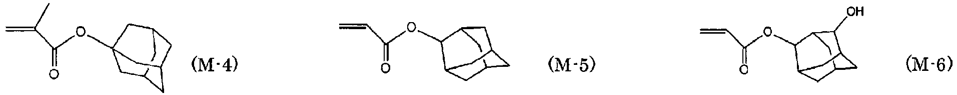

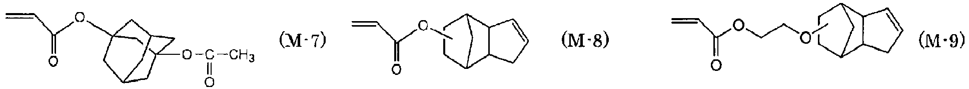

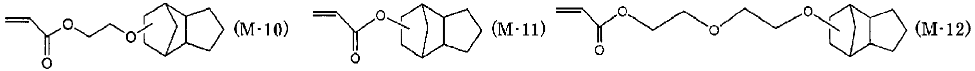

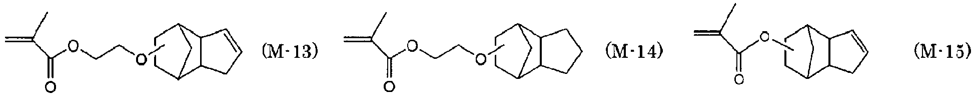

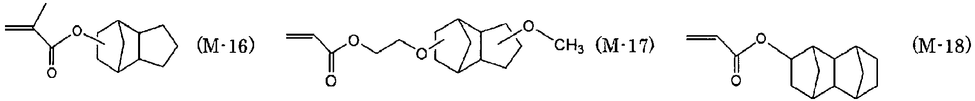

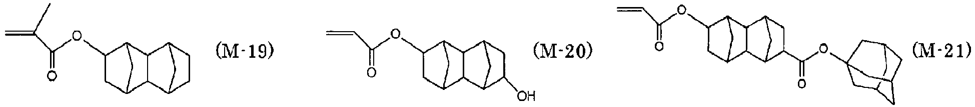

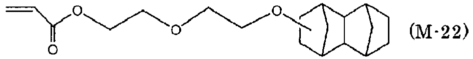

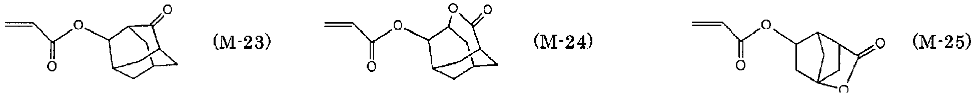

In the present invention, compound (B) is preferably a monofunctional (meth)acrylate compound having an isobornyl group, a dicyclopentenyl group, or a dicyclopentanyl group, and specific examples thereof include dicyclopentenyl acrylate, dicyclopentanyl acrylate, dicyclopentenyloxyethyl acrylate, dicyclopentanyloxyethyl acrylate, dicyclopentenyloxyethyl methacrylate, dicyclopentanyloxyethyl methacrylate, dicyclopentanyl methacrylate, isobornyl acrylate, and isobornyl methacrylate.

Among them, dicyclopentenyloxyethyl acrylate, dicyclopentanyloxyethyl acrylate, and isobornyl acrylate are preferable from the viewpoint of pigment dispersibility, curability, and substrate adhesion.

In the ink composition of the present invention, the content of the (meth)acrylate compound having an alicyclic structure is preferably 3 to 50 wt % of the total ink composition, more preferably 5 to 45 wt %, and yet more preferably 8 to 40 wt %.

It is preferable from the viewpoint of a balance between curability, adhesion, and pigment dispersion stability for the content of the (meth)acrylate compound having an alicyclic structure to be in the above-mentioned range.

### Other radically polymerizable monomer

### N-Vinyl group-containing cyclic monomer

In the present invention, it is preferable to use a monofunctional radically polymerizable monomer having an N-vinyl group and a cyclic structure-containing group. In particular, it is more preferable to use N-vinylcarbazole, 1-vinylimidazole, or an *N*-vinyllactam, and it is yet more preferable to use an *N*-vinyllactam.

Preferred examples of the *N*-vinyllactam that can be used in the present invention include compounds represented by Formula (2) below.

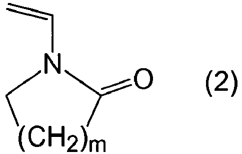

In Formula (2), m denotes an integer of 1 to 5; m is preferably an integer of 2 to 4 from the viewpoints of flexibility after the ink composition is cured, adhesion to a support, and starting material availability, m is more preferably 2 or 4, and m is particularly preferably 4, which is *N*-vinylcaprolactam. *N*-Vinylcaprolactam is preferable since it has excellent safety, is commonly used and easily available at a relatively low price, and gives particularly good ink curability and adhesion of a cured film to a support.

The *N*-vinyllactam may have a substituent such as an alkyl group or an aryl group on the lactam ring, and may have a saturated or unsaturated ring structure bonded thereto. The *N*-vinyllactam above may be contained in the ink composition singly or in a combination of a plurality of types.

In the present invention, the ink composition preferably comprises the *N-*vinyllactam represented by Formula (2) at no greater than 40 wt % of the entire ink composition, more preferably no greater than 35 wt %, and yet more preferably no greater than 30 wt %.

The *N*-vinyllactam is a compound having a relatively high melting point. It is preferable for the content of the N-vinyllactam to be no greater than 40 wt % since good solubility is exhibited even at a low temperature of 0°C or less and the temperature range in which the ink composition can be handled becomes large.

### Monofunctional radically polymerizable monomer having aromatic group

In the present invention, a monofunctional radically polymerizable monomer having an aromatic group may be used. With regard to the monofunctional radically polymerizable monomer having an aromatic group, one type may be used on its own or two or more types may be used in combination.

The radically polymerizable monomer having an aromatic group is preferably represented by Formula (b-1) below.

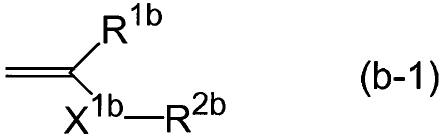

In Formula (b-1) above, R^{1b} denotes a hydrogen atom or a methyl group.

X^{1b} denotes a first divalent linking group in which (-C(O)O-) or (-C(O)NH-) is bonded to the ethylenically unsaturated double bond shown in Formula (b-1); this first divalent linking group may have bonded thereto a second divalent linking group that is a single bond, an ether bond (-O-), an ester bond (-C(O)O- or OC(O)-), an amide bond (-C(O)NH-, or-NHC(O)-), a carbonyl bond (-C(O)-), an optionally branched alkylene group having no greater than 20 carbon atoms, or a group formed by combining the above; it preferably has the first divalent linking group alone or, when it has the second divalent linking group, it is one having an ether bond, an ester bond, and/or an alkylene group having greater than 20 carbon atoms.

R^{2b} is a monovalent to trivalent group, and preferably a monovalent group, and denotes an aromatic group containing at least one or more monocyclic aromatic groups or polycyclic aromatic groups. The cyclic structure of the above-mentioned aromatic group may contain a heteroatom such as O, N, or S. When R^{2b} is a divalent or trivalent group, R^{2b} may further have bonded thereto Cl, a hydroxy group, or an alkoxy group.

In Formula (b-1), the aromatic group denoted by R^{2b} is preferably a monocyclic aromatic phenyl group or phenylene group, or a polycyclic aromatic group having 2 to 4 rings and, although not limited to these, specific examples thereof include a naphthyl group, a naphthalenediyl group, a naphthalenetriyl group, an anthryl group, an anthracenediyl group, an anthracenetriyl group, a 1H-indenyl group, a 1H-indenediyl group, a 1H-indenetriyl group, a 9H-fluorenyl group, a 9H-fluorenediyl group, a 9H-fluorenetriyl group, a 1H-phenalenyl group, a 1H-phenalenediyl group, a 1H-phenalenetriyl group, a phenanthrenyl group, a phenanthrenediyl group, a phenanthrenetriyl group, a triphenylenyl group, a triphenylenediyl group, a triphenylenetriyl group, a pyrenyl group, a pyrenediyl group, a pyrenetriyl group, a naphthacenyl group, a naphthacenediyl group, a naphthacenetriyl group, a tetraphenylenyl group, a tetraphenylenediyl group, a tetraphenylenetriyl group, a biphenylenyl group, a biphenylenediyl group, a biphenylenetriyl group, an *as-*indacenyl group, an *as*-indacenediyl group, an *as*-indacenetriyl group, an *s*-indacenyl group, an *s*-indacenediyl group, an s-indacenetriyl group, an acenaphthylenyl group, an acenaphthylenediyl group, an acenaphthylenetriyl group, a fluoranthenyl group, a fluoranthenediyl group, a fluoranthenetriyl group, an acephenanthrylenyl group, an acephenanthrylenediyl group, an acephenanthrylenetriyl group, an aceanthrylenyl group, an aceanthrylenediyl group, an aceanthrylenetriyl group, a chrysenyl group, a chrysenediyl group, a chrysenetriyl group, a pleiadenyl group, a pleiadenediyl group, and a pleiadenetriyl group.

These aromatic groups may be aromatic heterocyclic groups containing a heteroatom such as O, N, or S. Specifically, there can be cited monocyclic aromatic heterocyclic groups such as a furyl group, a furandiyl group, a furantriyl group, a thiophenyl group, a thiophenediyl group, a thiophenetriyl group, a 1H-pyrrolyl group, a 1H-pyrrolediyl group, a 1H-pyrroletriyl group, a 2H-pyrrolyl group, a 2H-pyrrolediyl group, a 2H-pyrroletriyl group, a 1H-pyrazolyl group, a 1H-pyrazolediyl group, a 1 H-pyrazoletriyl group, a 1H-imidazolyl group, a 1H-imidazolediyl group, a 1 H-imidazoletriyl group, an isooxazolyl group, an isooxazolediyl group, an isooxazoletriyl group, an isothiazolyl group, an isothiazolediyl group, an isothiazoletriyl group, a 2H-pyranyl group, a 2H-pyrandiyl group, a 2H-pyrantriyl group, a 2H-thiopyranyl group, a 2H-thiopyrandiyl group, a 2H-thiopyrantriyl group, a pyridyl group, a pyridinediyl group, a pyridinetriyl group, a pyridazinyl group, a pyridazinediyl group, a pyridazinetriyl group, a pyrimidinyl group, a pyrimidinediyl group, a pyrimidinetriyl group, a pyrazinyl group, a pyrazinediyl group, a pyrazinetriyl group, a 1,2,3-triazolyl group, a 1,2,3-triazolediyl group, a 1,2,3-triazoletriyl group, a 1,2,4-triazolyl group, a 1,2,4-triazolediyl group, and a 1,2,4-triazoletriyl group.

Furthermore, there can be cited polycyclic aromatic heterocyclic groups such as a thianthrenyl group, a thianthrenediyl group, a thianthrenetriyl group, an isobenzofuranyl group, an isobenzofurandiyl group, an isobenzofurantriyl group, an isochromenyl group, an isochromenediyl group, an isochromenetriyl group, a 4H-chromenyl group, a 4H-chromenediyl group, a 4H-chromenetriyl group, a xanthenyl group, a xanthenediyl group, a xanthenetriyl group, a phenoxathiinyl group, a phenoxathiinediyl group, a phenoxathiinetriyl group, an indolizinyl group, an indolizinediyl group, an indolizinetriyl group, an isoindolyl group, an isoindolediyl group, an isoindoletriyl group, an indolyl group, an indolediyl group, an indoletriyl group, an indazolyl group, an indazolediyl group, an indazoletriyl group, a purinyl group, a purinediyl group, a purinetriyl group, a 4H-quinolizinyl group, a 4H-quinolizinediyl group, a 4H-quinolizinetriyl group, an isoquinolyl group, an isoquinolinediyl group, an isoquinolinetriyl group, a quinolino group, a quinolinediyl group, a quinolinetriyl group, a phthalazinyl group, a phthalazinediyl group, a phthalazinetriyl group, a naphthyridinyl group, a naphthyridinediyl group, a naphthyridinetriyl group, a quinoxalinyl group, a quinoxalinediyl group, a quinoxalinetriyl group, a quinazolinyl group, a quinazolinediyl group, a quinazolinetriyl group, a cinnolinyl group, a cinnolinediyl group, a cinnolinetriyl group, a pteridinyl group, a pteridinediyl group, a pteridinetriyl group, a carbazolyl group, a carbazolediyl group, a carbazoletriyl group, a β-carbolinyl group, a β-carbolinediyl group, a β-carbolinetriyl group, a phenanthridinyl group, a phenanthridinediyl group, a phenanthridinetriyl group, an acridinyl group, an acridinediyl group, an acridinetriyl group, a perimidinyl group, a perimidinediyl group, a perimidinetriyl group, a phenanthrolinyl group, a phenanthrolinediyl group, a phenanthrolinetriyl group, a phenazinyl group, a phenazinediyl group, a phenazinetriyl group, a phenothiazinyl group, a phenothiazinediyl group, a phenothiazinetriyl group, a phenoxazinyl group, a phenoxazinediyl group, a phenoxazinetriyl group, a pyrrolizinyl group, a pyrrolizinediyl group, and a pyrrolizinetriyl group.

The aromatic group may have one or more halogen atom, hydroxy group, amino group, thiol group, siloxane group, or substituent having no greater than 30 carbon atoms. For example, as in phthalic anhydride or phthalimide, two or more substituents of the aromatic group may form a cyclic structure containing a heteroatom such as O, N, or S.

In the present invention, as the monofunctional radically polymerizable monomer having an aromatic group, a monofunctional radically polymerizable monomer having an acrylate group, a methacrylate group, an acrylamide group, or a methacrylamide group is preferable, and preferred examples thereof include a monofunctional radically polymerizable monomer having an aromatic group such as a phenyl group, a naphthyl group, or an anthracenyl group.

Preferred examples of the monofunctional radically polymerizable monomer having an aromatic group that can be used in the present invention include 2-benzyl (meth)acrylate, phenoxyethyl (meth)acrylate, phenoxydiethylene glycol (meth)acrylate, phenoxytriethylene glycol (meth)acrylate, ethylene oxide-modified cresol (meth)acrylate ('ethylene oxide' is also referred to as 'EO' below), nonylphenoxypolyethylene glycol (meth)acrylate, neopentylglycol benzoate (meth)acrylate, paracumylphenoxyethylene glycol (meth)acrylate, *N*-(1,1-dimethyl-2-phenyl)ethyl (meth)acrylamide, *N*-diphenylmethyl (meth)acrylamide, *N-*phthalimidomethyl (meth)acrylamide, *N*-(1,1'-dimethyl-3-(1,2,4-triazol-1-yl))propyl (meth)acrylamide, (poly)ethylene glycol (meth)acrylate phenyl ester, (poly)propylene glycol mono(meth)acrylate phenyl ester, and 2-hydroxy-3-phenoxypropyl acrylate.

Furthermore, specific examples of the monofunctional radically polymerizable monomer having an aromatic group that can be used in the present invention are shown in L-1 to L-12 below.

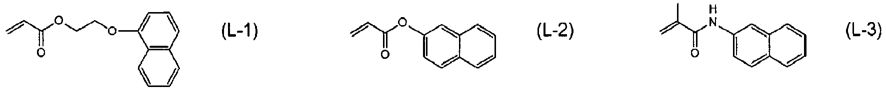

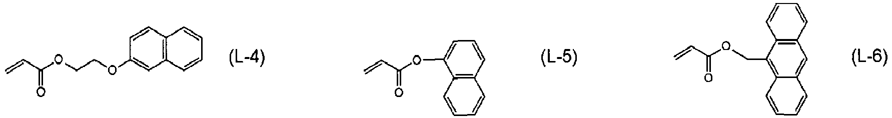

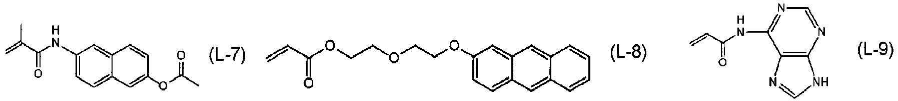

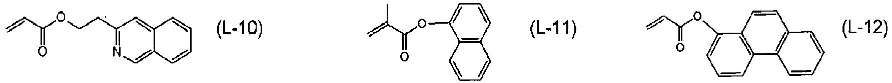

### Other radically polymerizable monomer

As another radically polymerizable monomer, an acyclic monofunctional monomer or a polyfunctional monomer described below may be used in combination as necessary.

The acyclic monofunctional monomer has relatively low viscosity and may be used preferably for the purpose of, for example, decreasing the viscosity of the ink composition. However, from the viewpoint of suppressing stickiness of a cured film and giving a high film strength so that scratches, etc. do not occur during molding, the proportion of the acyclic monofunctional monomer below in the entire composition is preferably no greater than 20 wt %, and more preferably no greater than 15 wt %. With regard to the acyclic monofunctional monomer, one type may be used on its own or two or more types may be used in combination.

Specific examples of the acyclic monofunctional monomer include methyl methacrylate, *n*-butyl methacrylate, octyl (meth)acrylate, 2-ethylhexyl (meth)acrylate, 2-ethylhexyl diglycol (meth)acrylate, isooctyl (meth)acrylate, *n*-nonyl (meth)acrylate, decyl (meth)acrylate, dodecyl (meth)acrylate, tridecyl (meth)acrylate, tetradecyl (meth)acrylate, hexadecyl (meth)acrylate, octadecyl (meth)acrylate, 2-hydroxyethyl (meth)acrylate, 2-hydroxybutyl acrylate, butoxyethyl (meth)acrylate, carbitol (meth)acrylate, 2-ethylhexyl-diglycol (meth)acrylate, polyethylene glycol (meth)acrylate monomethyl ether, polypropylene glycol (meth)acrylate monomethyl ether, polytetramethylene glycol (meth)acrylate monomethyl ether, (poly)ethylene glycol (meth)acrylate methyl ester, (poly)ethylene glycol (meth)acrylate ethyl ester, (poly)propylene glycol (meth)acrylate methyl ester, (poly)propylene glycol (meth)acrylate ethyl ester, 2-acryloyloxyethylsuccinic acid, diacetone (meth)acrylamide, and *N*-methylol (meth)acrylamide.

As the radically polymerizable monomer, a polyfunctional monomer described below may be used in combination as necessary. By containing a polyfunctional monomer, an ink composition having excellent curability and high cured film strength is obtained. From the viewpoint of cured film stretchability suitable for molding being maintained, the proportion of the polyfunctional monomer in the entire ink composition is preferably no greater than 18.4 wt %, and more preferably no greater than 14.4 wt %. With regard to the polyfunctional monomer, one type may be used on its own or two or more types may be used in combination.

Specific examples of the polyfunctional monomer include bis(4-(meth)acryloxypolyethoxyphenyl)propane, neopentyl glycol di(meth)acrylate, ethoxylated neopentyl glycol di(meth)acrylate, propoxylated neopentyl glycol di(meth)acrylate, 1,6-hexanediol di(meth)acrylate, 1,9-nonanediol di(meth)acrylate, 1,10-decanediol diacrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol di(meth)acrylate, pentaerythritol tri(meth)acrylate, pentaerythritol tetra(meth)acrylate, dipentaerythritol tetra(meth)acrylate, trimethylolethane tri(meth)acrylate, trimethylolpropane tri(meth)acrylate, ditrimethylolpropane tetra(meth)acrylate, tetramethylolmethane tetra(meth)acrylate, tetramethylolmethane tri(meth)acrylate, modified glycerol tri(meth)acrylate, modified bisphenol A di(meth)acrylate, bisphenol A propylene oxide adduct di(meth)acrylate (hereinafter, 'propylene oxide' is also called 'PO'), bisphenol A EO adduct di(meth)acrylate, dipentaerythritol hexa(meth)acrylate, caprolactone-modified dipentaerythritol hexa(meth)acrylate, (poly) tetramethylene glycol di(meth)acrylate, EO-modified pentaerythritol triacrylate, PO-modified pentaerythritol triacrylate, EO-modified pentaerythritol tetraacrylate, PO-modified pentaerythritol tetraacrylate, EO-modified dipentaerythritol tetraacrylate, PO-modified dipentaerythritol tetraacrylate, EO-modified trimethylolpropane triacrylate, PO-modified trimethylolpropane triacrylate, EO-modified tetramethylolmethane tetraacrylate, PO-modified tetramethylolmethane tetraacrylate, and hydroxypivalic acid neopentyl glycol di(meth)acrylate.

Furthermore, as the radically polymerizable compound, a vinyl ether compound is preferably used. Examples of vinyl ether compounds that can suitably be used include di- or tri-vinyl ether compounds such as ethylene glycol divinyl ether, ethylene glycol monovinyl ether, diethylene glycol divinyl ether, triethylene glycol monovinyl ether, triethylene glycol divinyl ether, propylene glycol divinyl ether, dipropylene glycol divinyl ether, butanediol divinyl ether, hexanediol divinyl ether, cyclohexanedimethanol divinyl ether, hydroxyethylmonovinyl ether, hydroxynonylmonovinyl ether, and trimethylolpropane trivinyl ether, and monovinyl ether compounds such as ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, *n*-propyl vinyl ether, isopropyl vinyl ether, isopropenyl vinyl ether, dodecyl vinyl ether, diethylene glycol monovinyl ether, and octadecyl vinyl ether.

Among these vinyl ether compounds, divinyl ether compounds and trivinyl ether compounds are preferable from the viewpoint of curability, adhesion, and surface hardness, and divinyl ether compounds are particularly preferable. The vinyl ether compound may be used singly or in a combination of two or more types as appropriate.

In the present invention, the monomers listed above as the above-mentioned polymerizable compounds have high reactivity, low viscosity, and excellent adhesion to a recording medium.

The content of the other radically polymerizable monomer in the ink composition is preferably 0 to 30 wt %, more preferably 0.1 to 25 wt %, and yet more preferably 0.3 to 20 wt %. It is preferable for the content of the other radically polymerizable monomer to be in the above-mentioned range from the viewpoint of a balance between adhesion, pigment dispersion stability, and curability being achieved.

Furthermore, the total amount of radically polymerizable monomers of the combined compound (A), compound (B), and other monomer as necessary in the ink composition is preferably 75 to 99.9 wt %, more preferably 78 to 99.8 wt %, and yet more preferably 80 to 99.8 wt %. It is preferable for the total amount of radically polymerizable monomers to be in the above-mentioned range in terms of realizing a desired color density when used in inkjet.

In the present invention, the radically polymerizable compound may be used in combination with an oligomer or a polymer. The oligomer referred to here means a compound having a molecular weight (a weight-average molecular weight for one having a molecular weight distribution) of 2,000 or greater, and the polymer referred to here means a compound having a molecular weight (a weight-average molecular weight for one having a molecular weight distribution) of 10,000 or greater. The oligomer and the polymer optionally have a radically polymerizable group. It is preferable for the oligomer and the polymer to have no more than 4 radically polymerizable groups per molecule (an average of no more than 4 over all the molecules contained for one having a molecular weight distribution) since an ink composition having excellent flexibility can be obtained. They can suitably be used from the viewpoint of adjusting the viscosity to a level most suitable for jetting the ink. (C) Radical polymerization initiator

The ink composition of the present invention comprises (C) a radical polymerization initiator.

As a radical polymerization initiator that can be used in the present invention, a known radical polymerization initiator may be used. The radical polymerization initiator that can be used in the present invention may be used singly or in a combination of two or more types. Furthermore, the radical polymerization initiator may be used in combination with a cationic polymerization initiator.

The radical polymerization initiator that can be used in the ink composition of the present invention is a compound that forms a polymerization initiating species by absorbing external energy. The external energy used for initiating polymerization can be broadly divided into heat and actinic radiation, and a thermal polymerization initiator and a photopolymerization initiator are used respectively. Examples of the actinic radiation include γ rays, β rays, an electron beam, ultraviolet rays, visible light, and infrared rays.

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, (l) a compound having a carbon-halogen bond, and (m) an alkylamine compound. With regard to these radical polymerization initiators, the above-mentioned compounds (a) to (m) may be used singly or in combination. The radical polymerization initiator in the present invention may suitably be used singly or in a combination of two or more types.

Preferred examples of the aromatic ketone (a) and the thio compound (e) include a compound having a benzophenone skeleton or a compound having a thioxanthone skeleton (thioxanthone compound) described in 'RADIATION CURING IN POLYMER SCIENCE AND TECHNOLOGY' J. P. FOUASSIER J. F. RABEK (1993), pp. 77 to 117. Preferred examples of the aromatic ketone (a), the acylphosphine compound (b) and the thio compound (e) include an α-thiobenzophenone compound described in JP-B-47-6416, a benzoin ether compound described in JP-B-47-3981, an α-substituted benzoin compound described in JP-B-47-22326, a benzoin derivative described in JP-B-47-23664, an aroylphosphonic acid ester described in JP-A-57-30704, a dialkoxybenzophenone described in JP-B-60-26483, benzoin ethers described in JP-B-60-26403 and JP-A-62-81345, α-aminobenzophenones described in JP-B-1-34242, US Pat. No. 4,318,791, and EP No. 0284561, *p*-di(dimethylaminobenzoyl)benzene described in JP-A-2-211452, a thio-substituted aromatic ketone described in JP-A-61-194062, an acylphosphine sulfide described in JP-B-2-9597, an acylphosphine described in JP-B-2-9596, a thioxanthone described in JP-B-63-61950, and a coumarin described in JP-B-59-42864.

Examples of the benzophenone compound include benzophenone, 4-phenylbenzophenone, isophthalophenone, and 4-benzoyl-4'-methylphenylsulfide. Examples of the thioxanthone compound include 2,4-diethylthioxanthone, 2-isopropylthioxanthone, and 2-chlorothioxanthone.

In the present invention, the aromatic ketone (a) is preferably an α-hydroxyketone, and examples thereof include 1-[4-(2-hydroxyethoxy)phenyl]-2-hydroxy-2-methyl-1-propan-1-one, 2-hydroxy-2-methyl-1-phenylpropan-1-one, and 1-hydroxycyclohexyl phenyl ketone.

Among them, the aromatic ketone (a) is particularly preferably a 1-hydroxycyclohexyl phenyl ketone compound. The 1-hydroxycyclohexyl phenyl ketone compound referred to in the present invention means 1-hydroxycyclohexyl phenyl ketone and a compound obtained by substituting 1-hydroxycyclohexyl phenyl ketone with any substituent. The substituent may be selected freely from a range that enables an ability as a radical polymerization initiator to be exhibited, and specific examples thereof include an alkyl group (e.g. a methyl group, an ethyl group, a propyl group, a butyl group, etc.).

In the present invention, the acylphosphine compound (b) is preferably an acylphosphine oxide compound.

Examples of the acylphosphine oxide compound include a compound having a structure represented by Formula (7) or (8).

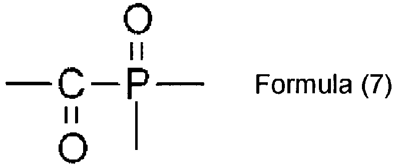

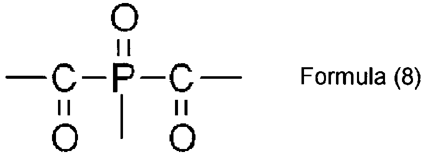

The acylphosphine oxide compound is particularly preferably one having a chemical structure represented by Formula (9) or (10). 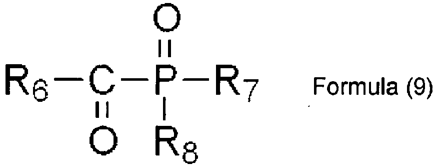 (In the formula, R₆, R₇, and R₈ denote an aromatic hydrocarbon group, which may have a methyl group or an ethyl group as a substituent.) 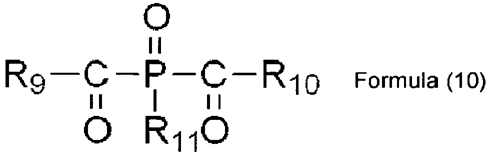 (In the formula, R₉, R₁₀, and R₁₁ denote an aromatic hydrocarbon group, which may have a methyl group or an ethyl group as a substituent.)

As the acylphosphine oxide compound, a monoacylphosphine oxide compound, a bisacylphosphine oxide compound, etc. may be used, and as the monoacylphosphine oxide compound, a known monoacylphosphine oxide compound may be used. Examples thereof include monoacylphosphine oxide compounds described in JP-B-60-8047 and JP-B-63-40799.

Specific examples thereof include methyl isobutyrylmethylphosphinate, methyl isobutyrylphenylphosphinate, methyl pivaloylphenylphosphinate, methyl 2-ethylhexanoylphenylphosphinate, isopropyl pivaloylphenylphosphinate, methyl *p-*tolylphenylphosphinate, methyl o-tolylphenylphosphinate, methyl 2,4-dimethylbenzoylphenylphosphinate, isopropyl *p*-*t*-butylbenzoylphenylphosphinate, methyl acryloylphenylphosphinate, isobutyryldiphenylphosphine oxide, 2-ethylhexanoyldiphenylphosphine oxide, *o*-tolyldiphenylphosphine oxide, *p-t-*butylbenzoyldiphenylphosphine oxide, 3-pyridylcarbonyldiphenylphosphine oxide, acryloyldiphenylphosphine oxide, benzoyldiphenylphosphine oxide, vinyl pivaloylphenylphosphinate, adipoyl-bis-diphenylphosphine oxide, pivaloyldiphenylphosphine oxide, *p*-tolyldiphenylphosphine oxide, 4-(*t-*butyl)benzoyldiphenylphosphine oxide, terephthaloyl-bis-diphenylphosphine oxide, 2-methylbenzoyldiphenylphosphine oxide, versatoyldiphenylphosphine oxide, 2-methyl-2-ethylhexanoyldiphenylphosphine oxide, 1-methylcyclohexanoyldiphenylphosphine oxide, methyl pivaloylphenylphosphinate, and isopropyl pivaloylphenylphosphinate.

As the bisacylphosphine oxide compound, a known bisacylphosphine oxide compound may be used. Examples thereof include bisacylphosphine oxide compounds described in JP-A-3-101686, JP-A-5-345790, and JP-A-6-298818.

Specific examples thereof include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichtoro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among them, preferred examples of the acylphosphine oxide compound in the present invention include bis(2,4,6-trimethylbenzoyl)phenylphosphine oxide (IRGACURE 819: manufactured by Ciba Specialty Chemicals), bis(2,6-dimethoxybenzoyl)-2,4,4-trimethylpentylphenylphosphine oxide, and 2,4,6-trimethylbenzoyldiphenylphosphine oxide (Darocur TPO: manufactured by Ciba Specialty Chemicals, Lucirin TPO: manufactured by BASF).

As the aromatic onium salt compound (c), there can be cited aromatic onium salts of elements of Groups 15, 16, and 17 of the periodic table, specifically, N, P, As, Sb, Bi, O, S, Se, Te, and I. Examples thereof include iodonium salts described in EP No. 104143, US Pat. No. 4837124, JP-A-2-150848, and JP-A-2-96514, diazonium salts (optionally substituted benzenediazoniums, etc.) described in EP Nos. 370693, 233567, 297443, 297442, 279210, and 422570, US Pat. Nos. 3902144, 4933377, 4760013, 4734444, and 2833827, diazonium salt resins (diazodiphenylamine formaldehyde resins, etc.), N-alkoxypyridinium salts, etc. (e.g. those described in US Pat. No. 4,743,528, JP-A-63-138345, JP-A-63-142345, JP-A-63-142346, and JP-B-46-42363; specific examples thereof include 1-methoxy-4-phenylpyridinium tetrafluoroborate); furthermore, compounds described in JP-B-52-147277, 52-14278, and 52-14279 may suitably be used. A radical or an acid is formed as an active species.

As the organic peroxide (d), almost all organic compounds having at least one oxygen-oxygen bond per molecule can be cited, and preferred examples thereof include peroxide ester compounds such as 3,3',4,4'-tetra(*t-*butylperoxycarbonyl)benzophenone, 3,3',4,4'-tetra(*t-*amylperoxycarbonyl)benzophenone, 3,3',4,4'-tetra(*t-*hexylperoxycarbonyl)benzophenone, 3,3',4,4'-tetra(*t-*octylperoxycarbonyl)benzophenone, 3,3',4,4'-tetra(cumylperoxycarbonyl)benzophenone, 3,3',4,4'-tetra(*p-*isopropylcumylperoxycarbonyl)benzophenone, and di-*t*-butyldiperoxyisophthalate.

As the hexaarylbiimidazole compound (f), there can be cited lophine dimers described in JP-B-45-37377 and JP-B-44-86516, and examples thereof include 2,2'-bis(*o*-chlorophenyl)-4,4',5,5'-tetraphenylbiimidazole, 2,2'-bis(o-bromophenyl)-4,4',5,5'-tetraphenylbiimidazole, 2,2'-bis(*o,p*-dichlorophenyl)-4,4',5,5'-tetraphenylbiimidazole, 2,2'-bis(*o*-chlorophenyl)-4,4',5,5'-tetra(*m*-methoxyphenyl)biimidazole, 2,2'-bis(*o,o'-*dichlorophenyl)-4,4',5,5'-tetraphenylbiimidazole, 2,2'-bis(*o*-nitrophenyl)-4,4',5,5'-tetraphenylbiimidazole, 2,2'-bis(*o*-methylphenyl)-4,4',5,5'-tetraphenylbiimidazole, and 2,2'-bis(*o*-trifluorophenyl)-4,4',5,5'-tetraphenylbiimidazole.

As the ketoxime ester compound (g), there can be cited 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-*p*-toluenesulfonyloxyiminobutan-2-one, and 2-ethoxycarbonyloxyimino-1-phenylpropan-1-one.

Examples of the borate compound (h) include compounds described in US Pat. Nos. 3,567,453 and 4,343,891, and EP Nos. 109,772 and 109,773.

Examples of the azinium salt compound (i) include N-O bond-containing compounds described in JP-A-63-138345, JP-A-63-142345, JP-A-63-142346, JP-A-63-143537, and JP-B-46-42363.

Examples of the metallocene compound (j) include titanocene compounds described in JP-A-59-152396, JP-A-61-151197, JP-A-63-41484, JP-A-2-249, and JP-A-2-4705, and iron-arene complexes described JP-A-1-304453 and JP-A-1-152109.

Specific examples of the titanocene compound include dicyclopentadienyl-Ti-dichloride, dicyclopentadienyl-Ti-bis-phenyl, di-cyclopentadienyl-Ti-bis-2,3,4,5,6-pentafluorophen-1-yl, dicyclopentadienyl-Ti-bis-2,3,5,6-tetrafluorophen-1-yl, dicyclopentadienyl-Ti-bis-2,4,6-trifluorophen-1-yl, dicyclopentadienyl-Ti-2,6-d ifluorophen-1-yl, dicyclopentadienyl-Ti-bis-2,4-difluorophen-1-yl, dimethylcyclopentadienyl-Ti-bis-2,3,4,5,6-pentafluorophen-1-yl, dimethylcyclopentadienyl-Ti-bis-2,3,5,6-tetrafluorophen-1-yl, dimethylcyclopentadienyl-Ti-bis-2,4-difluorophen-1-yl, bis(cyclopentadienyl)-bis(2,6-difluoro-3-(pyrr-1-yl)phenyl)titanium, bis(cyclopentadienyl)bis[2,6-difluoro-3-(methylsulfonamido)phenyl]titanium, and bis(cyclopentadienyl)bis[2,6-difluoro-3-(N-butylbiaroylamino)phenyl]titanium.

Examples of the active ester compound (k) include nitrobenzyl ester compounds described in EP Nos. 0290750, 046083, 156153, 271851, and 0388343, US Pat. Nos. 3901710 and 4181531, JP-A-60-198538, and JP-A-53-133022, iminosulfonate compounds described in EP Nos. 0199672, 84515, 199672, 044115, and 0101122, US Pat. Nos. 4618564, 4371605, and 4431774, JP-A-64-18143, JP-A-2-245756, and JP-A-4-365048, and compounds described in JP-B-62-6223, JP-B-63-14340, and JP-A-59-174831.

Preferred examples of the compound (I) having a carbon-halogen bond include a compound described in Wakabayashi et. al, Bull. Chem. Soc. Japan, 42, 2924 (1969), a compound described in British Patent No. 1388492, a compound described in JP-A-53-133428, and a compound described in German Patent No. 3337024.

Examples further include a compound described in F. C. Schaefer et al., J. Org. Chem., 29, 1527 (1964), a compound described in JP-A-62-58241, a compound described in JP-A-5-281728, a compound described in German Pat. No. 2641100, a compound described in German Pat. No. 3333450, compounds described in German Pat. No. 3021590, and compounds described in German Pat. No. 3021599.

It is preferable for the ink composition of the present invention to comprise an acylphosphine oxide compound, and it is more preferable to use an acylphosphine compound and an alkylphenone-based (hereinafter, also called acetophenone-based) photopolymerization initiator in combination. In accordance with the above-mentioned combination, an ink composition having excellent curability is obtained.

In the ink composition of the present invention, the total amount of radical polymerization initiator used is preferably 0.01 to 35 wt % relative to the total amount of polymerizable compound used, more preferably 0.5 to 20 wt %, and yet more preferably 1.0 to 15 wt %. The ink composition can be cured sufficiently with 0.01 wt % or greater of the polymerization initiator, and a cured film having a uniform degree of curing can be obtained with 35 wt % or less.

Furthermore, when a sensitizer, which will be described later, is used in the ink composition of the present invention, the total amount of polymerization initiator used is preferably 200:1 to 1:200 relative to the sensitizer as a ratio by weight of polymerization initiator : sensitizer, more preferably 50:1 to 1:50, and yet more preferably 20:1 to 1:5.

### (D) Pigment

The pigment that can be used in the present invention is not particularly limited; pigments having excellent weatherability and exhibiting good color reproduction are preferable. With regard to the pigment that can be used suitably in the ink composition or the inkjet recording ink composition of the present invention, from the viewpoint of not suppressing the sensitivity to a curing reaction by actinic radiation, a compound that does not function as a polymerization inhibitor in a polymerization reaction, which is a curing reaction, is preferably selected.

A pigment that can be used in the present invention is not particularly limited and, for example, organic and inorganic pigments with the Color Index Nos. shown below may be used according to the intended purpose.

Red or magenta pigments: Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36.

Blue or cyan pigments: Pigment Blue 1, 15, 15:1, 15:2, 15:3, 15:4, 15:6, 16, 17-1, 22, 27, 28, 29, 36, and 60.

Green pigments: Pigment Green 7, 26, 36, and 50.

Yellow pigments: Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193.

Black pigments: Pigment Black 7, 28, and 26.

White pigment: Pigment White 6, 18, and 21.

The pigment that can be used in the present invention is preferably added to the ink composition or the inkjet recording ink composition of the present invention and then dispersed in the ink to an appropriate degree. For dispersion of the pigment, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

When carrying out dispersion of the pigment, a dispersant may be added. The type of dispersant is not particularly limited, but it is preferable to use a polymeric dispersant, and examples of the polymeric dispersant include the Solsperse series manufactured by Avecia. Furthermore, as a dispersion adjuvant, it is also possible to use a synergist, according to the various types of pigment. In the present invention, the dispersant and dispersion adjuvant are preferably added at 1 to 50 parts by weight relative to 100 parts by weight of the pigment.

The pigment may be added directly to the ink composition of the present invention, but in order to improve dispersibility it may be added in advance to a solvent or a dispersing medium such as the component (B) used in the present invention and other polymerizable compound arbitrarily used in combination, homogeneously dispersed or dissolved, and then added to the ink composition.

In the present invention, in order to avoid the problem of the solvent resistance being degraded when the solvent remains in the cured image and the VOC (Volatile Organic Compound) problem of the residual solvent, it is preferable to add the pigment to either one of polymerizable compounds including the component (B) or the mixture thereof. As a polymerizable compound used, it is preferable in terms of dispersion suitability to select a monomer having the lowest viscosity.

These colorants may be used by appropriately selecting one type or two or more types according to the intended purpose of the ink composition.

When the pigment that is present as a solid in the ink composition of the present invention is used, it is preferable for the pigment, the dispersant, the dispersing medium, dispersion conditions, and filtration conditions to be set so that the average particle size of pigment particles is preferably 0.005 to 0.5 µm, more preferably 0.01 to 0.45 µm, and yet more preferably 0.015 to 0.4 µm. By such control of particle size, clogging of a head nozzle can be suppressed, and the ink storage stability, the ink transparency, and the curing sensitivity can be maintained.

The content of the pigment in the ink composition of the present invention is appropriately selected according to the intended purpose, and is generally preferably 1 to 10 wt % relative to the weight of the entire ink composition, and more preferably 2 to 8 wt % in consideration of properties of the ink composition and coloration properties.

### (E) Sensitizer

It is possible to add a sensitizer to the ink composition of the present invention in order to promote decomposition of the radical polymerization initiator (C) by irradiation with actinic radiation. The sensitizer absorbs specific actinic radiation to attain an electronically excited state. The sensitizer in an electronically excited state contacts the polymerization initiator to thus cause electron transfer, energy transfer, heat generation, etc., thereby promoting a chemical change of the polymerization initiator, that is, decomposition and formation of a radical, an acid, or a base.

The sensitizer may employ a compound that corresponds to the wavelength of actinic radiation used for generating an initiating species from the radical polymerization initiator (C) used in the ink composition. In consideration of the usage for a general curing reaction of an ink composition, preferred examples of the sensitizer include those that belong to compounds below and have an adsorption wavelength in the region of 350 nm to 450 nm.

Polynuclear aromatic compounds (e.g. pyrene, perylene, triphenylene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin).

Preferred examples of the sensitizer include compounds represented by Formulae (IX) to (XIII) below. 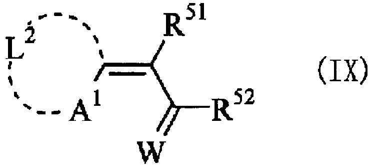 (In Formula (IX), A¹ denotes a sulfur atom or NR⁵⁰, R⁵⁰ denotes an alkyl group or an aryl group, L² denotes a non-metallic atomic group forming a basic nucleus of a dye in cooperation with a neighboring A¹ and the neighboring carbon atom, R⁵¹ and R⁵² independently denote a hydrogen atom or a monovalent non-metallic atomic group, and R⁵¹ and R⁵² may be bonded together to form an acidic nucleus of a dye. W denotes an oxygen atom or a sulfur atom.) 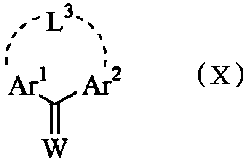 (In Formula (X), Ar¹ and Ar² independently denote an aryl group and are connected to each other via a bond of -L³-. Here, L³ denotes -O- or -S-. W has the same meaning as that shown in Formula (IX).) 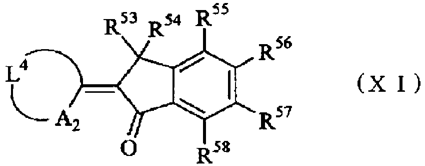 (In Formula (XI), A₂ denotes a sulfur atom or NR⁵⁹, L⁴ denotes a non-metallic atomic group forming a basic nucleus of a dye in cooperation with the neighboring A₂ and carbon atom, R⁵³, R⁵⁴, R⁵⁵, R⁵⁶, R⁵⁷, and R⁵⁸ independently denote a monovalent non-metallic atomic group, and R⁵⁹ denotes an alkyl group or an aryl group.) 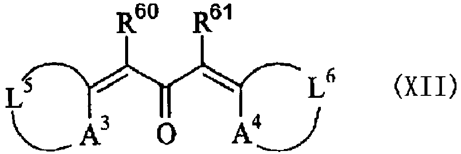 (In Formula (XII), A³ and A⁴ independently denote -S-, -NR⁶²-, or -NR⁶³-, R⁶² and R⁶³ independently denote a substituted or unsubstituted alkyl group, or a substituted or unsubstituted aryl group, L⁵ and L⁶ independently denote a non-metallic atomic group forming a basic nucleus of a dye in cooperation with the neighboring A³ and A⁴ and neighboring carbon atom, and R⁶⁰ and R⁶¹ independently denote a hydrogen atom or a monovalent non-metallic atomic group, or are bonded to each other to form an aliphatic or aromatic ring.) 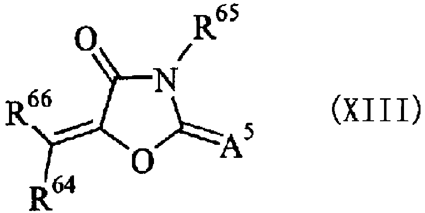 (In Formula (XIII), R⁶⁶ denotes an aromatic ring or a hetero ring, which may have a substituent, and A⁵ denotes an oxygen atom, a sulfur atom, or -NR⁶⁷-. R⁶⁴, R⁶⁵, and R⁶⁷ independently denote a hydrogen atom or a monovalent non-metallic atomic group, and R⁶⁷ and R⁶⁴, and R⁶⁵ and R⁶⁷ may be bonded to each other to form an aliphatic or aromatic ring.)

Specific examples of the compounds represented by Formulae (IX) to (XIII) include compounds listed below.

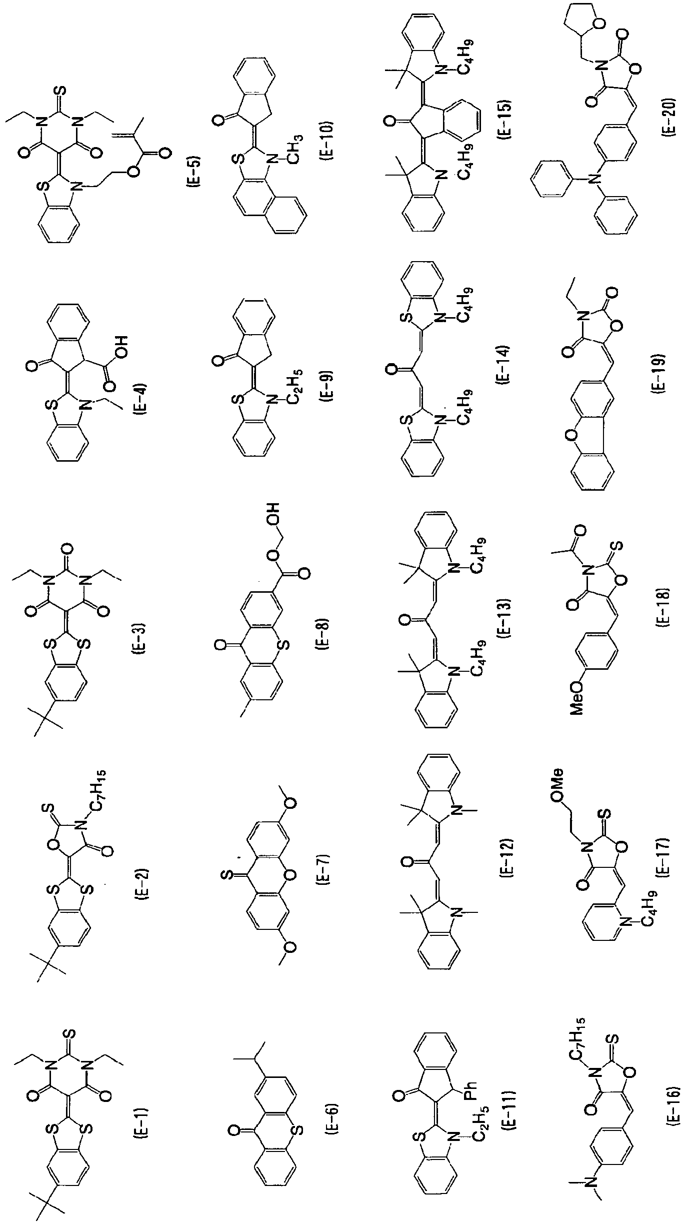

### (F) Cosensitizer

The ink composition of the present invention preferably comprises a cosensitizer. In the present invention, the cosensitizer has the function of further improving the sensitivity of the sensitizing dye to actinic radiation or the function of suppressing inhibition by oxygen of polymerization of a polymerizable compound, etc.

Examples of such a cosensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl p-dimethylaminobenzoate, *p-*formyldimethylaniline, and *p*-methylthiodimethylaniline.

Other examples of the cosensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g. *N*-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H and Ge-H compounds described in JP-A-8-54375 etc.

### (G) Other components

The ink composition of the present invention may comprise other components as necessary. Examples of the other components include polymerization inhibitors and solvents.

It is preferable to add the polymerization inhibitor from the viewpoint of enhancing the storage stability. When the ink composition of the present invention is used as an inkjet recording ink composition, it is preferably heated in the range of 40°C to 80°C to thus make it less viscous and then discharged, and in order to prevent clogging of a head due to thermal polymerization it is preferable to add a polymerization inhibitor. The polymerization inhibitor is preferably added at 200 to 20,000 ppm relative to the total amount of the ink composition of the present invention. Examples of the polymerization inhibitor include hydroquinone, benzoquinone, *p*-methoxyphenol, TEMPO, TEMPOL, and Al cupferron.

While taking into consideration the ink composition and the inkjet recording ink composition of the present invention being radiation curing type ink compositions, it is preferable for them not to contain any solvent so that the ink compositions can react quickly and be cured immediately after landing. However, as long as the curing speed, etc. of the ink composition is not affected, a specified solvent may be added. In the present invention, as a solvent, an organic solvent or water may be used. In particular, the organic solvent may be added in order to improve the adhesion to a recording medium (a support such as paper). Adding an organic solvent having a high boiling point is effective since the problem with VOC can be avoided.

The amount of organic solvent is preferably 0 to 5 wt % relative to the total amount of the ink composition of the present invention, and more preferably 0 to 3 wt%.

In addition to the above, the ink composition of the present invention may contain a known compound as necessary. Examples thereof include a surfactant, a leveling additive, a matting agent and, for adjusting film physical properties, a polyester resin, polyurethane resin, vinyl resin, acrylic resin, rubber resin, or wax, which may be appropriately selected and added. Furthermore, in order to improve the adhesion to a recording medium such as a polyolefin or PET, a tackifier that does not inhibit polymerization is preferably added. Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### Properties of ink composition

The ink composition of the present invention may be used suitably as an ink composition for inkjet recording. Preferred physical properties in such a mode of use are now explained.

When the ink composition is used as an ink composition for inkjet recording, while taking dischargeability into consideration, the viscosity at the discharge temperature (preferably 20°C to 80°C, and more preferably 25°C to 50°C) is preferably 7 to 30 mPa·s, and more preferably 7 to 25 mPa·s. For example, the ink composition of the present invention preferably has a viscosity at room temperature (25°C to 30°C) of 35 to 500 mPa·s, and more preferably 35 to 200 mPa·s.

With regard to the ink composition of the present invention, it is preferable that its component ratio is appropriately adjusted so that the viscosity is in the above-mentioned range. By setting the viscosity so that it is high at room temperature, even when a porous recording medium is used, penetration of the ink composition into the recording medium can be prevented, uncured monomer can be reduced, and odor can be reduced. Furthermore, spreading of the ink composition when ink composition droplets have landed can be suppressed, and as a result the image quality is improved.

The surface tension of the ink composition of the present invention is preferably 20 to 30 mN/m, and more preferably 23 to 28 mN/m. When recording is carried out on various types of recording medium such as polyolefin, PET, coated paper, and uncoated paper, from the viewpoint of spreading and penetration, it is preferably at least 20 mN/m, and from the viewpoint of wettability it is preferably not more than 30 mN/m.

### Inkjet recording method

The ink composition of the present invention is preferably for inkjet recording use.

An inkjet recording method and an inkjet recording device that are desirably employed in the present invention are now explained.

The present invention provides a method for forming an image by discharging the above-mentioned ink composition onto a recording medium (support, recording material, etc.) and curing the ink composition by irradiating the ink composition so discharged onto the recording medium with actinic radiation.

More specifically, the present invention relates to an inkjet recording method comprising: (a) a step of discharging an ink composition onto a recording medium; and (b) a step of curing the ink composition by irradiating the ink composition so discharged with actinic radiation, wherein the ink composition is the ink composition of the present invention.

The cured ink composition forms an image on the recording medium.

The step (a) of the inkjet recording method of the present invention may employ an inkjet recording device that will be described in detail below.

### Inkjet recording device

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink onto a recording medium in step (a) of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of 1 to 100 pL, and preferably 8 to 30 pL, at a resolution of 320 x 320 to 4,000 x 4,000 dpi, preferably 400 x 400 to 1,600 x 1,600 dpi, and more preferably 720 x 720 dpi. Here, dpi referred to in the present invention means the number of dots per 2.54 cm.

As described above, since it is desirable for the radiation curing type ink to be discharged at a constant temperature, a section from the ink supply tank to the inkjet head is thermally insulated and heated. A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

The step (b) of curing the discharged ink composition by irradiating the ink composition with actinic radiation is now explained.

The ink composition discharged onto the recording medium cures upon exposure to actinic radiation. This is due to a radical initiating species being generated by decomposition of the radical polymerization initiator (C) contained in the ink composition of the present invention by irradiation with actinic radiation, the initiating species functioning so as to make a polymerization reaction of the component (A), the component (B), and other radically polymerizable compound arbitrarily used in combination take place and to promote it. In this process, if the sensitizer (E) is present together with the radical polymerization initiator (C) in the ink composition, the sensitizer (E) in the system absorbs actinic radiation, becomes excited, and promotes decomposition of the polymerization initiator by contact with the radical polymerization initiator (C), thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizing dye, the peak wavelength of the actinic radiation is, for example, preferably 200 to 600 nm, more preferably 300 to 450 nm, and yet more preferably 350 to 420 nm.

Furthermore, in the present invention, the polymerization initiation system has sufficient sensitivity for low output actinic radiation. Therefore, the output of the actinic radiation is preferably no greater than 2,000 mJ/cm², and is more preferably 10 to 2,000 mJ/cm², yet more preferably 20 to 1,000 mJ/cm², and particularly preferably 50 to 800 mJ/cm². The actinic radiation is applied so that the illumination intensity on the exposed surface is, for example, 10 to 2,000 mW/cm², and preferably 20 to 1,000 mW/cm².

As an actinic radiation source, a mercury lamp, a gas/solid laser, etc. are mainly used, and for UV photocuring inkjet a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another violet LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mW/cm².

The ink composition of the present invention is desirably exposed to such actinic radiation preferably for 0.01 to 120 sec, and more preferably 0.1 to 90 sec.

Irradiation conditions for the actinic radiation and basic irradiation methods are disclosed in JP-A-60-132767. Specifically, light sources are provided on opposite sides of a head unit comprising an ink composition discharge system, and the head unit and the light sources are made to scan by a so-called shuttle system. Irradiation with actinic radiation is carried out after a fixed period of time (preferably 0.01 to 0.5 sec, more preferably 0.01 to 0.3 sec, and particularly preferably 0.01 to 0.15 sec) has elapsed after the ink composition has landed. By controlling the time from after the ink composition has landed until before the irradiation so that it is a very short time, it is possible to prevent the ink composition that has landed on a recording medium from spreading before being cured. Furthermore, when a porous recording medium is used, since exposure can be carried out before the ink composition penetrates to a deep part where the light source cannot reach, it is possible to suppress residual unreacted monomer, and as a result the odor can be reduced.

Moreover, curing may be completed by another light source that is not driven. International patent application WO 99/54415 discloses as an irradiation method a method employing optical fiber or a method in which a collimated light source is shone on a mirror surface provided on a side face of a head unit and a recording area is irradiated with UV rays, and such a curing method can also be applied to the inkjet recording method of the present invention.

By employing the above-mentioned inkjet recording method, it is possible to keep the diameter of landed ink dots constant even for various recording media having different surface wettability, thus improving the image quality. In order to obtain a color image, it is preferable to overlap in order from low lightness colors. By overlapping in order from low lightness inks, it becomes easy for radiation to reach ink in a lower part, and good curing sensitivity, reduction of residual monomer, reduction of odor, and improvement in adhesion can be expected. Although it is possible to carry out irradiation all at once after all colors are discharged, it is preferable in terms of promoting curing that exposure to light is carried out for each color.

In this way, the ink composition of the present invention cures with high sensitivity upon exposure to actinic radiation, and a hydrophobic image is formed on the surface of a recording medium.

### EXAMPLES

The present invention is explained below in further detail by reference to Examples and Comparative Examples. However, the present invention should not be construed as being limited to these Examples.

'Parts' given below means 'parts by weight' unless otherwise specified.
Materials used in the ink composition of the present invention are as follows. IRGALITE BLUE GLVO (Cyan pigment, Ciba Japan)
NOVOPERM YELLOW H2G (Yellow pigment, Clariant)
CINQUASIA MAGENTA RT-335 D (Magenta pigment, Ciba Japan)
TIPAQUE CR-60-2 (Titanium oxide (white pigment), Ishihara Sangyo Kaisha Ltd.) FA-511AS (Dicyclopentenyl acrylate, Hitachi Chemical Co., Ltd.)
FA-512AS (Dicyclopentanyloxyethyl acrylate, Hitachi Chemical Co., Ltd.)
V#155 (Cyclohexyl acrylate, Osaka Organic Chemical Industry Ltd.)
SR506 (Isobornyl acrylate, Sartomer Company Inc.)
SR339 (2-Phenoxyethyl acrylate, Sartomer Company Inc.)
SR285 (Tetrahydrofurfuryl acrylate, Sartomer Company Inc.)
SR508 (Dipropylene glycol diacrylate, Sartomer Company Inc.)
SR492 (Propoxylated (3) trimethylol propane triacrylate, Sartomer Company Inc.)
SR212 (1,3-Butylene glycol diacrylate, Sartomer Company Inc.)
SR213 (1,4-Butanediol diacrylate, Sartomer Company Inc.)
SR9003 (Propoxylated (2) neopentyl glycol diacrylate)
RAPI-CURE DVE-3 (Triethylene glycol divinyl ether (3,6,9,12-tetraoxatetradeca-1,13-diene), ISP)
FIRSTCURE ST-1 (Polymerization inhibitor, ChemFirst Inc.)
IRGACURE 184 (1-Hydroxycyclohexyl phenyl ketone, polymerization initiator, Ciba Japan)
IRGACURE 819 (bis(2,4,6-Trimethylbenzoyl)-phenylphosphine oxide, polymerization initiator, Ciba Japan)
Lucirin TPO (2,4,6-Trimethylbenzoyldiphenylphosphine oxide, polymerization initiator, BASF)
FIRSTCURE ITX (Isopropylthioxanthone (2-and 4-isomer mixture), ChemFirst Inc.)
BYK-307 (Polyether-modified polydimethylsiloxane, silicon-based surfactant, BYK-Chemie Japan)
DISPERBYK-168 (Polymeric dispersant, BYK-Chemie Japan)
SOLSPERSE 32000 (Polymeric dispersant, The Lubrizol Corporation)
SOLSPERSE 36000 (Polymeric dispersant, The Lubrizol Corporation)

### Preparation of mill base

Each of cyan, yellow, magenta, black, and white mill bases was mixed using the formulations below, and stirred in a mixer (L4R, Silverson) at 2,500 rpm for 10 min. Subsequently, the mixture was placed in a DISPERMAT LS bead mill disperser (VMA) and dispersed using YTZ balls having a diameter of 0.65 mm (Nikkato Corporation) at 2,500 rpm for 6 hours.

| Preparation of cyan mill base | |
|---|---|
| IRGALITE BLUE GLVO | 30 parts |
| RAPI-CURE DVE-3 | 50 parts |
| DISPERBYK-168 | 20 parts |

| Preparation of yellow mill base | |
|---|---|
| NOVOPERM YELLOW H2G | 30 parts |
| RAPI-CURE DVE-3 | 42 parts |
| DISPERBYK-168 | 28 parts |

| Preparation of magenta mill base | |
|---|---|
| CINQUASIA MAGENTA RT-335 D | 30 parts |
| SOLSPERSE 32000 | 11 parts |
| SR9003 | 58 parts |
| FIRSTCURE ST-1 | 1 parts |

| Preparation of white base | |
|---|---|
| TIPAQUE CR-60-2 | 70 parts |
| SR339 | 25 parts |
| SOLSPERSE 36000 | 5 parts |

### (Examples)

With regard to an ink preparation method, the components shown in Table 3 to Table 5 below were stirred using a mixer (L4R, Silverson) at 3,000 rpm for 20 minutes, thus giving each of the ink compositions. After the ink was prepared, it was subjected to centrifuging using an SRX-201 high-speed refrigerated centrifuge (TOMY SEIKO Co., Ltd.) at 12,000 rpm for 20 minutes to thus remove a sediment, and then to filtration using a TCP-015AM filter (Advantec) having a 99% or greater particle trapping ability of 1.5 micron by connecting a KS-90-UH multipurpose disk filter holder (Advantec) to a DF-4 direct filtration pressure tank (Advantec). Subsequently, it was subjected to ultrasonic treatment using a US-600CCVP (Nissei Corporation) for 20 minutes, thus giving a target ink.

In the tables, the amount mixed is expressed as parts by weight of each component.

### Evaluation

### Inkjet image recording method

Subsequently, recording was carried out on a recording medium using an experimental inkjet recording device having a piezo system inkjet nozzle. The ink supply system comprised a main tank, a supply pipe, an ink supply tank immediately before an inkjet head, a filter, and a piezo system inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 45°C ±2°C. The piezo system inkjet head was driven so as to discharge multisize dots of 8 to 30 pL at a resolution of 720 x 720 dpi. The exposure system, the main scanning speed, and the discharge frequency were adjusted so that, after landing, UV light was focused to give an exposure area illumination intensity of 1,200 mW/cm², and irradiation started 0.1 sec. after the ink landed on the recording medium. The cumulative amount of light applied to an image was adjusted so as to be 1,000 mJ/cm². The UV lamp employed a HAN250NL high-cure mercury lamp (manufactured by GS Yuasa Corporation). Here, dpi referred to in the present invention denotes the number of dots per 2.54 cm. The recording medium employed an Mron (Emu-ron) calender sheet (white) (manufactured by Morino Kako Co., Ltd.).

### Evaluation of curing sensitivity

In accordance with the above-mentioned inkjet recording method, a solid printed image having an average film thickness of 12 µm was formed, and the stickiness of the image was evaluated by touch after the image was irradiated with ultraviolet rays.

The curing sensitivity was evaluated using the following criteria.
A: No stickiness on image.
B: Image was only slightly sticky.
C: Image was slightly sticky.
D: Not hardened, to the extent that uncured ink was transferred to the hand.

### Adhesion to recording medium

The surface of an acrylic substrate as a recording medium was coated with ink composition using a K hand coater (bar No. 2) so as to give a wet film thickness of 12 µm. Subsequently, it was radiation-cured by passing it repeatedly through a CSOT UV conveyor (G S Yuasa Power Supply Ltd.) equipped with a MAN250L ozone-free metal halide lamp and set at a conveyor speed of 8.7 m/min and an exposure intensity of 760 W/cm² until tackiness of the coated surface disappeared. Adhesion to the recording medium was evaluated using this cured film in accordance with ISO 2409 (cross-cut method) using the criteria below.
A: The cut edge was completely smooth, and there was no peeling anywhere in any lattice cell.
B: There was only slight peeling, and the cross-cut portion affected did not exceed 10%.
C: There was large amount of peeling along the edge of cuts of the coated film in parts or in the whole area, and/or various parts of lattice cells were partially or completely peeled. The cross-cut portion affected was greater than 10% but did not exceed 35%.
D: There was large amount of peeling along the edge of cuts of the coated film in parts or in the whole area, and/or lattice cells of several areas were partially or completely peeled. The cross-cut portion affected exceeded 35%.

### Pigment dispersion stability

After preparation of an ink, the viscosity of the ink was measured, the ink was then stored under an environment of 60°C for 4 weeks, the viscosity of the ink aged for 4 weeks was measured, and the pigment dispersion stability was evaluated.

The pigment dispersion stability was evaluated using the criteria below.

When calculation of [viscosity of ink stored at 60°C for 4 weeks]/[viscosity after preparation of ink] was carried out, the calculated value is:
A: No greater than 1.1.
B: Greater than 1.1 but no greater than 1.2.
C: Greater than 1.2 but no greater than 1.3.
D: Greater than 1.3.

Results are shown in Table 3 to Table 9 below.+

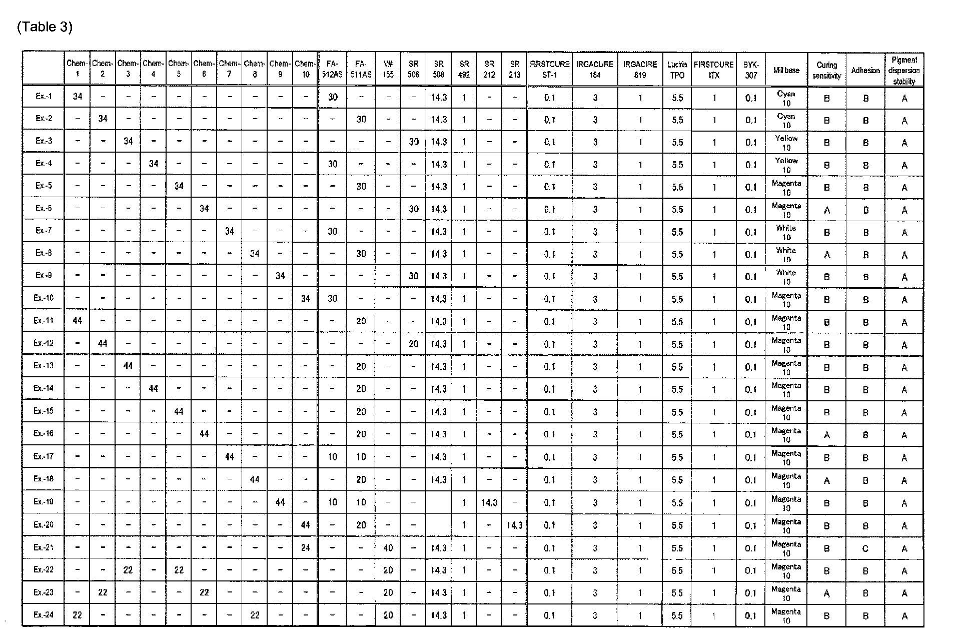

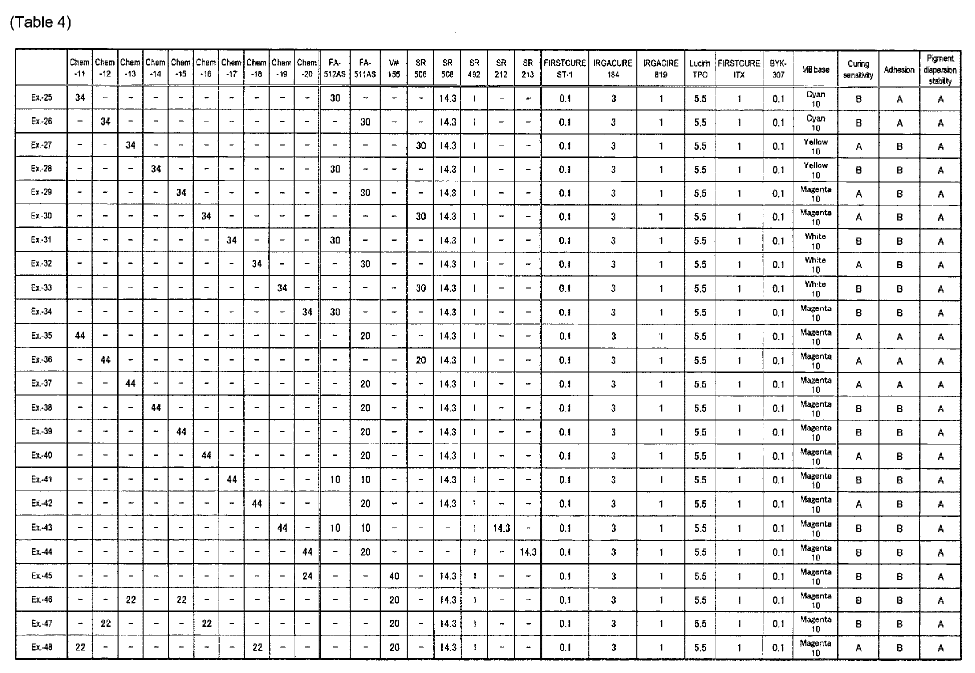

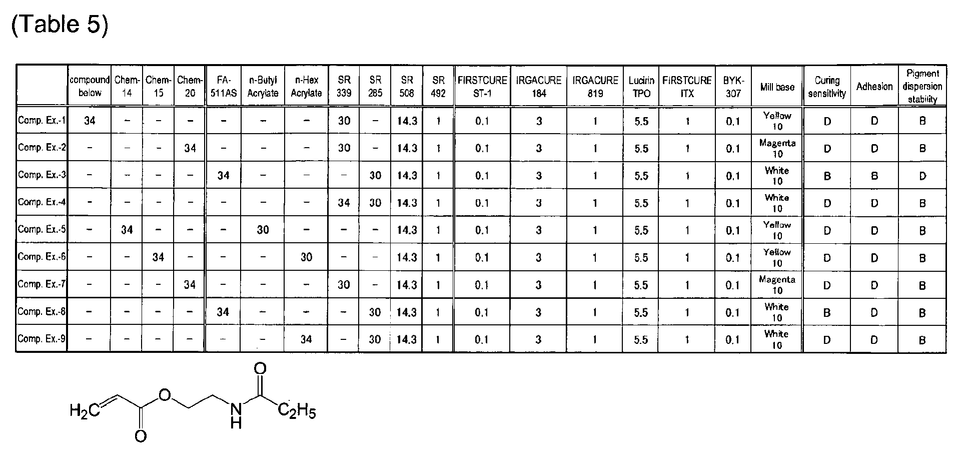

## Claims

1. An ink composition comprising:
(A) a compound represented by Formula (1);
(B) a (meth)acrylate compound having an alicyclic structure;
(C) a radical polymerization initiator; and
(D) a pigment; 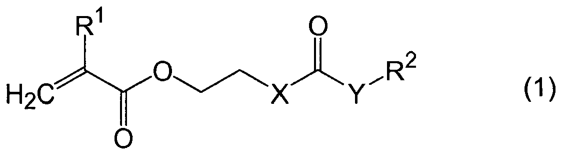 wherein:
R¹ denotes a hydrogen atom or a methyl group,
R² denotes an alkyl group,
X denotes -O- and Y denotes -O- or a single bond.

2. The ink composition according to Claim 1, wherein with regard to X and Y in Formula (1), X is -O- and Y is -O-.

3. The ink composition according to Claims 1 or 2, wherein R² in Formula (1) is a straight-chain or branched alkyl group having 1 to 18 carbon atoms or a cycloalkyl group having 3 to 15 carbon atoms.

4. The ink composition according to any one of Claims 1 to 3, wherein compound (A) represented by Formula (1) has a content of 3 to 70 wt % of the total ink composition.

5. The ink composition according to any one of Claims 1 to 4, wherein the (meth)acrylate compound (B) having an alicyclic structure is a compound represented by Formula (B-2) or Formula (B-3) 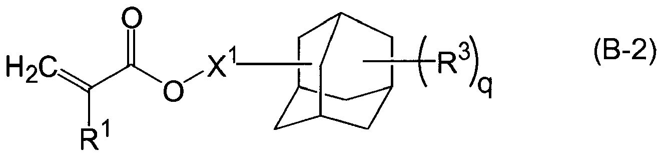 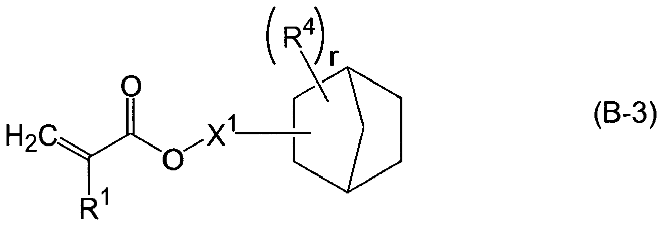 wherein in Formula (B-2) and (B-3),
R¹ denotes a hydrogen atom or a methyl group,
X¹ denotes a single bond or a divalent linking group,
R³ and R⁴ independently denote a substituent,
q denotes an integer of 0 to 5,
r denotes an integer of 0 to 5, a carbon atom of the adamantane skeleton in Formula (B-2) may be replaced by a carbonyl bond (-C(O)-) and/or an ester bond (-C(O)O-), and a carbon atom of the norbornane skeleton in Formula (B-3) may be replaced by an ether bond (-O-) and/or an ester bond (-C(O)O-).

6. The ink composition according to any one of Claims 1 to 5, wherein the (meth)acrylate compound (B) having an alicyclic structure is a compound represented by Formula (B-5), Formula (B-6), or Formula (B-7) 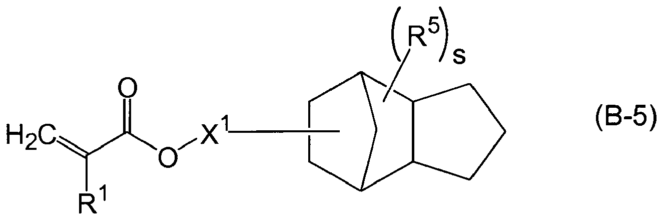 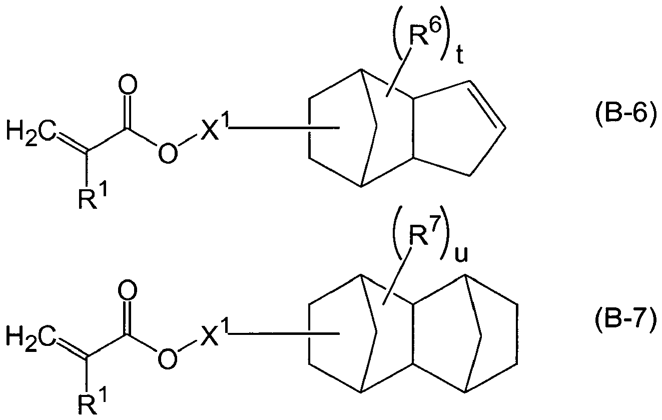 wherein in Formula (B-5), Formula (B-6), and Formula (B-7),
R¹ denotes a hydrogen atom or a methyl group,
X¹ denotes a single bond or a divalent linking group,
R⁵, R⁶, and R⁷ independently denote a substituent,
s, t, and u independently denote an integer of 0 to 5, and
the s R⁵s, the t R⁶s, and the u R⁷s may be identical to or different from each other.

7. The ink composition according to any one of Claims 1 to 6, wherein the (meth)acrylate compound (B) having an alicyclic structure has a content of 3 to 50 wt % of the total ink composition.

8. The ink composition according to any one of Claims 1 to 7, wherein it further comprises a monofunctional radically polymerizable monomer having an N-vinyl group and having a cyclic structure-containing group.

9. The ink composition according to any one of Claims 1 to 8, wherein it further comprises a monofunctional radically polymerizable monomer having an aromatic group.

10. The ink composition according to any one of Claims 1 to 9, wherein the radical polymerization initiator (C) comprises an acylphosphine oxide compound.

11. An inkjet recording method comprising:
(a) a step of discharging onto a recording medium the ink composition according to any one of Claims 1 to 10; and
(b) a step of curing the ink composition by irradiating the discharged ink composition with actinic radiation.

## Patentansprüche

1. Tintenzusammensetzung, umfassend:
(A) eine Verbindung der Formel (1);
(B) eine (Meth)acrylatverbindung mit einer alicyclischen Struktur;
(C) einen radikalischen Polymerisationsinitiator; und
(D) ein Pigment; 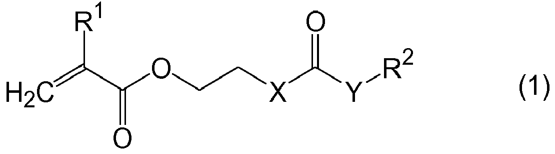 worin:
R¹ für ein Wasserstoffatom oder eine Methylgruppe steht,
R² für eine Alkylgruppe steht,
X für -O- steht und Y für -O- oder eine Einfachbindung steht.

2. Tintenzusammensetzung nach Anspruch 1, wobei bezüglich X und Y in Formel (1) X für -O- steht und Y für -O- steht.

3. Tintenzusammensetzung nach Anspruch 1 oder 2, wobei R² in Formel (1) für eine geradkettige oder verzweigte Alkylgruppe mit 1 bis 18 Kohlenstoffatomen oder eine Cycloalkylgruppe mit 3 bis 15 Kohlenstoffatomen steht.

4. Tintenzusammensetzung nach einem der Ansprüche 1 bis 3, wobei Verbindung (A) der Formel (1) einen Gehalt von 3 bis 70 Gew.-%, bezogen auf die gesamte Tintenzusammensetzung, aufweist.

5. Tintenzusammensetzung nach einem der Ansprüche 1 bis 4, wobei es sich bei der (Meth)acrylatverbindung (B) mit einer aliyclischen Struktur um eine Verbindung der Formel (B-2) oder Formel (B-3) handelt: 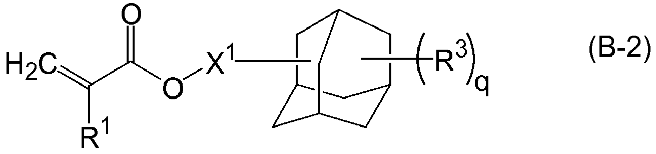 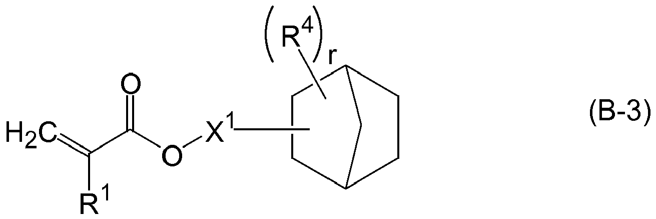 worin in Formel (B-2) und (B-3)
R¹ für ein Wasserstoffatom oder eine Methylgruppe steht,
X¹ für eine Einfachbindung oder eine zweiwertige Brückengruppe steht,
R³ und R⁴ unabhängig für einen Substituenten stehen,
q für eine ganze Zahl von 0 bis 5 steht,
r für eine ganze Zahl von 0 bis 5 steht,
ein Kohlenstoffatom des Adamantangerüsts in Formel (B-2) durch eine Carbonylbindung (-C(O)-) und/oder eine Esterbindung (-C(O)O-) ersetzt sein kann und ein Kohlenstoffatom des Norbornangerüsts in Formel (B-3) durch eine Etherbindung (-0-) und/oder eine Esterbindung (-C(O)O-) ersetzt sein kann.

6. Tintenzusammensetzung nach einem der Ansprüche 1 bis 5, wobei es sich bei der (Meth)acrylatverbindung (B) mit einer aliyclischen Struktur um eine Verbindung der Formel (B-5), Formel (B-6) oder Formel (B-7) handelt: 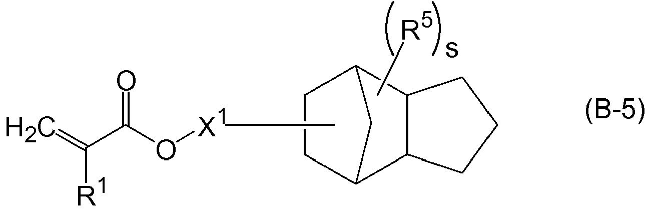 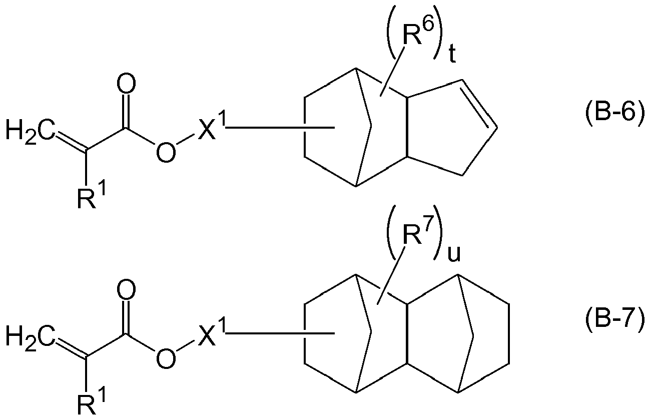 worin in Formel (B-5), Formel (B-6) und Formel (B-7)
R¹ für ein Wasserstoffatom oder eine Methylgruppe steht,
X¹ für eine Einfachbindung oder eine zweiwertige Brückengruppe steht,
R⁵, R⁶ und R⁷ unabhängig für einen Substituenten stehen,
s, t und u unabhängig für eine ganze Zahl von 0 bis 5 stehen und
die s R⁵-Gruppen, die t R⁶-Gruppen und die u R⁷-Gruppen gleich oder voneinander verschieden sein können.

7. Tintenzusammensetzung nach einem der Ansprüche 1 bis 6, wobei die(Meth)acrylatverbindung (B) mit einer aliyclischen Struktur einen Gehalt von 3 bis 50 Gew.-%, bezogen auf die gesamte Tintenzusammensetzung, aufweist.

8. Tintenzusammensetzung nach einem der Ansprüche 1 bis 7, wobei sie ferner ein monofunktionelles radikalisch polymerisierbares Monomer mit einer N-Vinylgruppe und einer eine cyclische Struktur enthaltenden Gruppe umfasst.

9. Tintenzusammensetzung nach einem der Ansprüche 1 bis 8, wobei sie ferner ein monofunktionelles radikalisch polymerisierbares Monomer mit einer aromatischen Gruppe umfasst.

10. Tintenzusammensetzung nach einem der Ansprüche 1 bis 9, wobei der radikalische Polymerisationsinitiator (C) eine Acylphosphinoxidverbindung umfasst.

11. Tintenstrahlaufzeichnungsverfahren, umfassend:
(a) einen Schritt des Austragens der Tintenzusammensetzung nach einem der Ansprüche 1 bis 10 auf ein Aufzeichnungsmedium und
(b) einen Schritt des Härtens der Tintenzusammensetzung durch Bestrahlen der ausgetragenen Tintenzusammensetzung mit aktinischer Strahlung.

## Revendications

1. Composition d'encre comprenant :
(A) un composé représenté par la formule (1) ;
(B) un composé (méth)acrylate ayant une structure alicyclique ;
(C) un initiateur de polymérisation radicalaire ; et
(D) un pigment ; 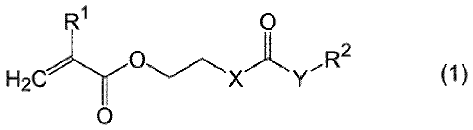 dans laquelle :
R¹ représente un atome d'hydrogène ou un groupe méthyle,
R² représente un groupe alkyle,
X représente -O- et Y représente -0- ou une simple liaison.

2. Composition d'encre selon la revendication 1, dans laquelle pour ce qui est de X et Y dans la formule (1), X est -O- et Y est -0-.

3. Composition d'encre selon la revendication 1 ou 2, dans laquelle R² dans la formule (1) est un groupe alkyle à chaîne linéaire ou ramifié ayant 1 à 18 atomes de carbone ou un groupe cycloalkyle ayant 3 à 15 atomes de carbone.

4. Composition d'encre selon l'une quelconque des revendications 1 à 3, dans laquelle le composé (A) représenté par la formule (1) a une teneur de 3 à 70 % en poids de la composition d'encre totale.

5. Composition d'encre selon l'une quelconque des revendications 1 à 4, dans laquelle le composé (méth)acrylate (B) ayant une structure alicyclique est un composé représenté par la formule (B-2) ou la formule (B-3) 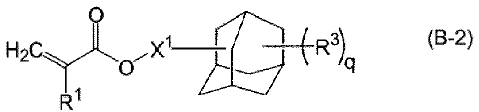 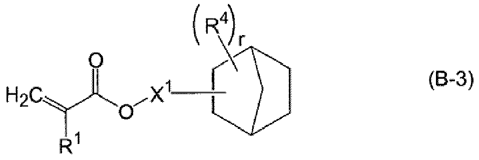 dans laquelle, dans les formules (B-2) et (B-3),
R¹ représente un atome d'hydrogène ou un groupe méthyle,
X¹ représente une simple liaison ou un groupe de liaison divalent,
R³ et R⁴ représentent indépendamment un substituant,
q représente un entier de 0 à 5,
r représente un entier de 0 à 5,
un atome de carbone du squelette adamantane dans la formule (B-2) peut être remplacé par une liaison carbonyle (-C(O)-) et/ou une liaison ester (-C(O)O-), et un atome de carbone du squelette norbornane dans la formule (B-3) peut être remplacé par une liaison éther (-0-) et/ou une liaison ester (-C(O)O-).

6. Composition d'encre selon l'une quelconque des revendications 1 à 5, dans laquelle le composé (méth)acrylate (B) ayant une structure alicyclique est un composé représenté par la formule (B-5), la formule (B-6), ou la formule (B-7) 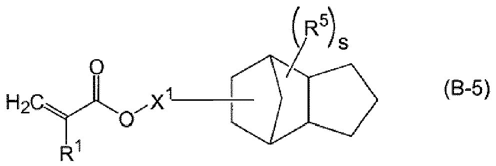 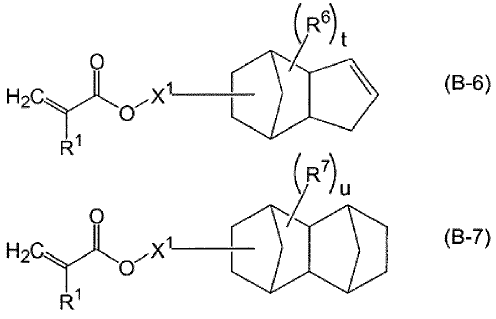 dans laquelle, dans la formule (B-5), la formule (B-6), et la formule (B-7),
R¹ représente un atome d'hydrogène ou un groupe méthyle,
X¹ représente une simple liaison ou un groupe de liaison divalent,
R⁵, R⁶ et R⁷ représentent indépendamment un substituant,
s, t et u représentent indépendamment un entier de 0 à 5, et
les s R⁵, les t R⁶ et les u R⁷ peuvent être identiques ou différents les uns des autres.

7. Composition d'encre selon l'une quelconque des revendications 1 à 6, dans laquelle le composé (méth)acrylate (B) ayant une structure alicyclique a une teneur de 3 à 50 % en poids de la composition d'encre totale.

8. Composition d'encre selon l'une quelconque des revendications 1 à 7, comprenant en outre un monomère monofonctionnel polymérisable par voie radicalaire ayant un groupe *N*-vinyle et ayant un groupe contenant une structure cyclique.

9. Composition d'encre selon l'une quelconque des revendications 1 à 8, comprenant en outre un monomère monofonctionnel polymérisable par voie radicalaire ayant un groupe aromatique.

10. Composition d'encre selon l'une quelconque des revendications 1 à 9, dans laquelle l'initiateur de polymérisation radicalaire (C) comprend un composé oxyde d'acylphosphine.

11. Procédé d'enregistrement par jet d'encre comprenant :
(a) une étape de décharge sur un support d'enregistrement de la composition d'encre selon l'une quelconque des revendications 1 à 10 ; et
(b) une étape de durcissement de la composition d'encre par irradiation de la composition d'encre déchargée avec un rayonnement actinique.
